(19) **Europäisches Patentamt / European Patent Office / Office européen des brevets**

(11) **EP 4 642 121 A1**

(12) **EUROPEAN PATENT APPLICATION**
published in accordance with Art. 153(4) EPC

(43) Date of publication:
**29.10.2025 Bulletin 2025/44**

(21) Application number: **23914601.2**

(22) Date of filing: **29.12.2023**

(51) International Patent Classification (IPC):
*H04W 72/02* (2009.01)

(52) Cooperative Patent Classification (CPC):
**H04W 72/02; H04W 72/566**

(86) International application number:
**PCT/CN2023/143247**

(87) International publication number:
**WO 2024/146469 (11.07.2024 Gazette 2024/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.01.2023 CN 202310002205**
**30.01.2023 CN 202310128223**

(71) Applicant: **Huawei Technologies Co., Ltd.**
**Shenzhen, Guangdong 518129 (CN)**

(72) Inventor: **LIU, Yun**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **RESOURCE ALLOCATION METHOD AND APPARATUS**

(57) This application relates to a resource allocation method and an apparatus. A first terminal device determines first duration, where the first duration is duration that is in COT and that is allocable to another terminal device. The first terminal device determines a second terminal device and a resource needed by the second terminal device, where the second terminal device includes a terminal device whose data priority is a first priority in the another terminal device, and the first priority is determined in descending order of data priorities of other terminal devices. If all resources needed by the second terminal device are fewer than or equal to a remaining resource in the first duration, the first terminal device allocates the remaining resource in the first duration to all terminal devices included in the second terminal device. If all resources needed by the second terminal device are more than a remaining resource in the first duration, the first terminal device allocates the remaining resource in the first duration to a part of terminal devices included in the second terminal device. A resource requirement of the another terminal device is considered during resource allocation, so that a resource allocated to the another terminal device can better meet the transmission requirement of the another terminal device, to improve a transmission success rate of the another terminal device.

FIG. 3

**EP 4 642 121 A1**

**Description**

CROSS-REFERENCE TO RELATED APPLICATIONS

This application claims priorities to Chinese Patent Application No. 202310002205.2, filed with the China National Intellectual Property Administration on January 3, 2023 and entitled "COMMUNICATION RESOURCE DETERMINING METHOD AND DEVICE", and to Chinese Patent Application No. 202310128223.5, filed with the China National Intellectual Property Administration on January 30, 2023 and entitled "RESOURCE ALLOCATION METHOD AND APPARATUS", both of which are incorporated herein by reference in their entireties.

TECHNICAL FIELD

This application relates to the field of communication technologies, and in particular, to a resource allocation method and an apparatus.

BACKGROUND

Sidelink (sidelink, SL)-unlicensed (unlicensed, U) is an important topic that is currently under discussion, and main content is to perform SL transmission in an unlicensed spectrum (unlicensed band). Because of the unlicensed spectrum, two access mechanisms, namely, a type (Type) 1 and a type 2, are introduced in standards. The type 1 may be used in a channel preemption scenario, in which listen before talk (listen before talk, LBT) detection needs to be performed before SL transmission.

The type 2 may be for sharing a transmission resource preempted by another UE in the type 1. For example, a user equipment (user equipment, UE) 1 preempts a transmission opportunity in a period of time in the type 1, where the transmission opportunity may be referred to as channel occupancy time (channel occupancy time, COT). In the COT, the UE 1 may indicate another UE to use, in the type 2, a remaining transmission resource in the COT except a transmission resource occupied by the UE 1. This behavior of sharing the COT with another UE for transmission may be referred to as COT-sharing (sharing).

After preempting COT, one UE may allocate a remaining transmission resource in the COT to one or more UEs. However, how to allocate the remaining transmission resource in the COT to another UE is a problem to be urgently resolved currently.

SUMMARY

Embodiments of this application provide a resource allocation method and an apparatus, to provide a manner of allocating a transmission resource in COT to another terminal device.

According to a first aspect, a first resource allocation method is provided. The method may be performed by a terminal device, may be performed by another device including functions of the terminal device, or may be performed by a chip system (or a chip) or another functional module. The chip system or the functional module can implement the functions of the terminal device, and is, for example, disposed in the terminal device. The terminal device is, for example, referred to as a first terminal device. The method includes: determining first duration, where the first duration is duration that is in channel occupancy time COT and that is allocable to another terminal device; determining a second terminal device and a resource needed by the second terminal device, where the second terminal device includes a terminal device whose data priority is a first priority in the another terminal device, and the first priority is determined in descending order of data priorities of other terminal devices; and if all resources needed by the second terminal device are fewer than or equal to a remaining resource in the first duration, allocating the remaining resource in the first duration to all terminal devices included in the second terminal device; or if all resources needed by the second terminal device are more than a remaining resource in the first duration, allocating the remaining resource in the first duration to a part of terminal devices included in the second terminal device.

In this embodiment of this application, the first terminal device may allocate resources in the COT to other terminal devices in descending order of the data priorities, to enable as much as possible a resource to be preferentially allocated to a terminal device of a high data priority, and reduce a transmission delay of a high-priority service. When resources are allocated to terminal devices of a specific priority, the allocation may be performed based on all resources needed by the terminal devices of the priority, so that resource requirements of all the terminal devices of the specific priority can be met as much as possible. Even if the first duration cannot meet all resources needed by terminal devices of a specific priority, a resource may be allocated to a part of terminal devices of the priority, so that as many terminal devices as possible can obtain resources, to improve a system throughput. In other words, this embodiment of this application provides an implementable resource allocation method, and a resource requirement of the another terminal device is considered during resource allocation, so that a resource allocated to the another terminal device can better meet the transmission requirement of the another terminal device, to improve a transmission success rate of the another terminal device.

In an optional implementation, the allocating the remaining resource in the first duration to a part of terminal devices included in the second terminal device includes: sequentially allocating the remaining resource in the first duration to the part of terminal devices included in the second terminal device until a remaining resource in the first duration is insufficient to be allocated to a next second terminal device or until the remaining resource in the first duration is completely allocated. The first terminal device may sequentially allocate the resource in the first duration to the part of terminal devices. An allocation process may be stopped if the remaining resource in the first duration is insufficient to be allocated to the next terminal device (namely, a terminal device to which a resource is to be allocated) in the second terminal device. In this case, there may be an unallocated resource in the first duration. Alternatively, an allocation process is stopped if the resource in the first duration is completely allocated. In this case, there is no unallocated resource in the first duration. For example, even if the remaining resource in the first duration is fewer than a resource needed by the next terminal device in the second terminal device, the first terminal device may alternatively allocate the remaining resource to the next terminal device, to improve resource utilization.

In an optional implementation, the sequentially allocating the resource in the first duration to the part of terminal devices included in the second terminal device includes: sequentially allocating, based on a first parameter, the resource in the first duration to the part of terminal devices included in the second terminal device. For example, the first terminal device may sequentially allocate the resource in the first duration to the part of terminal devices in descending or ascending order of values of the first parameter, so that the allocation process can be performed in a corresponding sequence. Optionally, the first parameter includes, for example, a quantity of resources needed by a terminal device and/or a cycle (for example, referred to as a resource cycle) of a needed resource.

In an optional implementation, the method further includes: receiving a reservation message from the another terminal device, where the reservation message indicates a resource reserved by the another terminal device. The determining a resource needed by the second terminal device includes: determining, based on the reservation message, the resource needed by the second terminal device. For example, a reservation message sent by a terminal device may indicate a resource reserved by the terminal device, and the resource reserved by the terminal device may be understood as a resource needed by the terminal device. In this way, the first terminal device may determine, based on the reservation message from the another terminal device, the resource needed by the terminal device. Alternatively, the first terminal device may determine, in another manner, the resource needed by the another terminal device. For example, the first terminal device does not need to depend on the reservation message, but can determine, in a process of communicating with the another terminal device, the resource needed by the another terminal device.

In an optional implementation, the first duration is determined based on maximum duration of the COT, data transmission duration of the first terminal device in the COT, and a data processing delay of the another terminal device.

In an optional implementation, the maximum duration of the COT is determined based on a data priority of the first terminal device; or the maximum duration of the COT is determined based on a lowest priority in a data priority of the first terminal device and a data priority of at least one terminal device. The maximum duration of the COT may be determined based on the data priority of the first terminal device. In this case, the first terminal device may determine the maximum duration of the COT based on the data priority of the first terminal device without considering another factor. Therefore, implementation is simple. Alternatively, the maximum duration of the COT may be determined based on the lowest priority in the data priority of the first terminal device and the data priority of the at least one terminal device. For example, the first terminal device may determine the lowest priority in the data priority of the first terminal device and the data priority of the at least one terminal device, and determine the maximum duration of the COT based on the lowest priority. A lower data priority indicates longer maximum duration of corresponding COT, so that the first terminal device can determine longer COT, to obtain more resources.

In an optional implementation, the maximum duration of the COT is determined based on the data priority of the first terminal device, and the data priority of the another terminal device is equal to or higher than the data priority of the first terminal device. The maximum duration of the COT is determined based on the data priority of the first terminal device. If the data priority of the another terminal device is lower than the data priority of the first terminal device, maximum duration of COT supported by the another terminal device is longer than the maximum duration of the COT, and the COT cannot meet the resource needed by the another terminal device. Therefore, if the maximum duration of the COT is determined based on the data priority of the first terminal device, a data priority of a terminal device to which the first terminal device may allocate a resource may be equal to or higher than the data priority of the first terminal device.

In an optional implementation, the COT meets one or more of the following: The maximum duration of the COT is greater than second duration, the second duration is determined based on a period of time in which the another terminal device receives sharing information and the data processing delay of the another terminal device, and the sharing information is for allocating a resource in the first duration. Alternatively, a difference obtained by subtracting the data transmission duration of the first terminal device in the COT from the maximum duration of the COT is greater than 0.

Alternatively, the data transmission duration of the first terminal device in the COT is greater than or equal to a first threshold, and the first threshold is determined based on the data processing delay of the another terminal device. The maximum duration of the COT is greater than the second duration, to ensure that a terminal device that receives the sharing information can use a resource indicated by the sharing information. The difference obtained by subtracting the data transmission duration of the first terminal device in the COT from the maximum duration of the COT is greater than 0, to ensure that in the COT, there is sharable remaining duration other than the duration occupied by the first terminal device. That the data transmission duration of the first terminal device in the COT is greater than or equal to the first threshold indicates: The first terminal device is to send a large amount of SL data. This can reduce a resource waste.

In an optional implementation, the method further includes: determining third duration, where the third duration includes the duration occupied by the first terminal device and total duration allocated to the another terminal device that are in the COT. The third duration may be less than or equal to the maximum duration of the COT. This may be understood as: The third duration is duration actually occupied in the COT, and includes the duration occupied by the first terminal device and the duration allocated to the another terminal device.

In an optional implementation, the method further includes: sending sharing information to a second terminal device, where the sharing information indicates the third duration and indicates a resource allocated to the second terminal device in the third duration, a quantity of bits occupied by the sharing information is a first quantity, and the first quantity is determined based on the maximum duration of the COT or is determined based on the third duration. If the second terminal device above includes one terminal device, the second terminal device in this paragraph is the terminal device; or if the second terminal device above includes a plurality of terminal devices, the second terminal device in this paragraph is any one of the plurality of terminal devices. If the first terminal device allocates the resource in the COT to the second terminal device, the allocated resource may be indicated to the second terminal device by using the sharing information. A third terminal device is, for example, any terminal device included in the second terminal device, or may not be included in the second terminal device. The quantity of bits occupied by the sharing information may be determined based on the maximum duration of the COT, or may be determined based on the third duration, so that overheads of the sharing information can be reduced.

In an optional implementation, that the first quantity is determined based on the maximum duration of the COT includes: When the sharing information indicates one resource in the first duration, the first quantity satisfies the following relationship: $\mathrm{D}=\left\lceil \log_2\left(\mathrm{T}^{\mu}_{\mathrm{COT,max}} - C1\right)\right\rceil$ ; or when the sharing information indicates two resources in the first duration or indicates at least three consecutive resources in the first duration, the first quantity satisfies the following relationship: $\mathrm{D}=\left\lceil \log_2\left[\left(T^{\mu}_{COT,max} - C1\right) \times \left(T^{\mu}_{COT,max} - C2\right)/2\right]\right\rceil$ . D represents the first quantity, $T^{\mu}_{COT,max}$ represents the maximum duration of the COT, both C1 and C2 are integers greater than or equal to 0, and $\lceil x \rceil$ represents a ceiling operation on x.

In an optional implementation, that the first quantity is determined based on the maximum duration of the COT includes: When the sharing information indicates one resource in the first duration, the first quantity satisfies the following relationship: $\mathrm{D}=\left\lceil \log_2\left(\mathrm{T}^{\mu}_{\mathrm{COT,max}} - \mathrm{T}^{\mu}_{\mathrm{gap}} - 1\right)\right\rceil$ ; or when the sharing information indicates two resources in the first duration or indicates at least three consecutive resources in the first duration, the first quantity satisfies the following relationship: $\mathrm{D}=\left\lceil \log_2\left[\left(T^{\mu}_{COT,max} - T^{\mu}_{gap} - 1\right) \times \left(T^{\mu}_{COT,max} - T^{\mu}_{gap}\right)/2\right]\right\rceil$ . D represents the first quantity, $T^{\mu}_{COT,max}$ represents the maximum duration of the COT, $T^{\mu}_{gap}$ represents a minimum time interval between a resource occupied by the first terminal device and a resource occupied by the another terminal device in the COT, and $\lceil x \rceil$ represents a ceiling operation on x.

In an optional implementation, that the first quantity is determined based on the third duration includes: When the sharing information indicates one resource in the first duration, the first quantity satisfies the following relationship: $\mathrm{D}=\left\lceil \log_2\left(T_{COT} - \mathrm{T}^{\mu}_{\mathrm{gap}} - 1\right)\right\rceil$ ; or when the sharing information indicates two resources in the first duration or indicates at least three consecutive resources in the first duration, the first quantity satisfies the following relationship: $\mathrm{D}=\left\lceil \log_2\left[\left(T_{COT} - T^{\mu}_{gap} - 1\right) \times \left(T_{COT} - T^{\mu}_{gap}\right)/2\right]\right\rceil$ . D represents the first quantity, $T_{COT}$ represents the third duration, $T^{\mu}_{gap}$ represents a minimum time interval between a resource occupied by the first terminal device and a resource occupied by the another terminal device in the COT, and $\lceil x \rceil$ represents a ceiling operation on x.

In an optional implementation, that the first quantity is determined based on the maximum duration of the COT includes: The first quantity is determined based on the maximum duration of the COT and the data transmission duration of the first terminal device in the COT.

In an optional implementation, that the first quantity is determined based on the maximum duration of the COT and the data transmission duration of the first terminal device in the COT includes: When the sharing information indicates one resource in the first duration, the first quantity satisfies the following relationship: $\lceil \log_2 \left( T^{\mu}_{COT,max} - T^{\mu}_{demand} \right) \rceil$ ; or when the sharing information indicates two resources in the first duration or indicates at least three consecutive resources in the first duration, the first quantity satisfies the following relationship:

$$\lceil \log_2 \left[ \left( T^{\mu}_{COT,max} - T^{\mu}_{demand} \right) \times \left( T^{\mu}_{COT,max} - T^{\mu}_{demand} + 1 \right)/2 \right] \rceil$$ . D represents the first quantity, $T^{\mu}_{COT,max}$ represents the maximum duration of the COT, $T^{\mu}_{demand}$ represents the data transmission duration of the first terminal device in the COT, and $\lceil x \rceil$ represents a ceiling operation on x.

In an optional implementation, that the first quantity is determined based on the third duration includes: The first quantity is determined based on the third duration and the data transmission duration of the first terminal device in the COT.

In an optional implementation, that the first quantity is determined based on the third duration and the data transmission duration of the first terminal device in the COT includes: When the sharing information indicates one resource in the first duration, the first quantity satisfies the following relationship: $\lceil \log_2 \left( T_{COT} - T^{\mu}_{demand} \right) \rceil$ ; or when the sharing information indicates two resources in the first duration or indicates at least three consecutive resources in the first duration, the first quantity satisfies the following relationship:

$$\lceil \log_2 \left[ \left( T_{COT} - T^{\mu}_{demand} \right) \times \left( T_{COT} - T^{\mu}_{demand} + 1 \right)/2 \right] \rceil$$ . D represents the first quantity, $T_{COT}$ represents the third duration, $T^{\mu}_{demand}$ represents the data transmission duration of the first terminal device in the COT, and $\lceil x \rceil$ represents a ceiling operation on x.

In an optional implementation, the maximum duration of the COT is a maximum value that is of a quantity of slots occupied by the COT and that is determined based on a first subcarrier spacing.

According to a second aspect, a second resource allocation method is provided. The method may be performed by a terminal device, may be performed by another device including functions of the terminal device, or may be performed by a chip system (or a chip) or another functional module. The chip system or the functional module can implement the functions of the terminal device, and is, for example, disposed in the terminal device. The terminal device is, for example, referred to as a second terminal device. The method includes: receiving sharing information from a first terminal device, where the sharing information indicates a resource that is in COT and that is allocated to the second terminal device; and if a priority corresponding to the COT is higher than a priority of a first transport block, sending a first data packet on the resource allocated to the second terminal device, where the first data packet does not include any data, and the first transport block is a transport block that the second terminal device expects to send.

In this embodiment of this application, the second terminal device may send a null packet. This is equivalent to: Even if the second terminal device cannot send a corresponding transport block on a resource in the COT, the second terminal device may still occupy the resource by using the null packet, so that the resource that is in the COT and that is allocated to the second terminal device is not preempted by another UE. This reduces a conflict probability, and improves an SL data transmission success rate.

In an optional implementation, a transport block to be sent by the second terminal device does not include a transport block whose priority is higher than or equal to the priority corresponding to the COT. If the transport block to be sent by the second terminal device includes the transport block whose priority is higher than or equal to the priority corresponding to the COT, the second terminal device may send the transport block, and does not need to send the null packet. In this way, the resource that is in the COT and that is allocated to the second terminal device can be occupied to reduce the conflict probability, and a data transmission delay of the second terminal device can be reduced.

In an optional implementation, the resource allocated to the second terminal device does not include last one or more time domain units in the COT. If the resource that is in the COT and that is allocated to the second terminal device includes the last one or more time domain units in the COT, it indicates that a resource after the resource in the COT may not be allocated to another UE, in other words, a resource after the resource is idle. In this case, even if the resource after the resource is preempted by another terminal device, transmission performed by a terminal device in the COT is not affected. Therefore, if the resource includes the last one or more time domain units in the COT, the second terminal device may not need to send the null packet, so that power consumption of the second terminal device can be reduced.

In an optional implementation, a payload of the first data packet includes a random number; a payload of the first data packet includes preset information; or a payload of the first data packet includes a reference signal. Although the first data packet does not carry data, the first data packet still has a payload field. In this case, the payload of the first data packet may include the random number or the preset information. Alternatively, the payload of the first data packet may include the reference signal, and a UE that receives the reference signal may perform measurement, to optimize channel quality by using a resource 1, and improve resource utilization.

In an optional implementation, the method further includes: sending sidelink control information, where the sidelink control information includes first indication information, and the first indication information indicates that the first data packet is a null data packet or indicates that the first data packet does not include data. A terminal device that receives the sidelink control information may determine, based on the first indication information, that the first data packet is a null packet, and may not need to perform decoding or the like on the first data packet, to reduce power consumption of processing the first data packet by the terminal device.

According to a third aspect, a third resource allocation method is provided. The method may be performed by a terminal device, may be performed by another device including functions of the terminal device, or may be performed by a chip system (or a chip) or another functional module. The chip system or the functional module can implement the functions of the terminal device, and is, for example, disposed in the terminal device. The terminal device is, for example, referred to as a second terminal device. The method includes: sending a reservation message, where the reservation message is for reserving at least one resource, and the reservation message further indicates information related to a priority of a transport block to be sent on the at least one resource.

In this embodiment of this application, the reservation message sent by the second terminal device may indicate the priority of the transport block to be sent on the reserved resource. For example, a first terminal device may determine COT based on the priority. In this way, a probability that a data priority of the COT matches a priority of SL data to be sent by the second terminal device can be improved, a sending success rate of the second terminal device can be improved, and resource utilization in the COT can also be improved.

In an optional implementation, the priority is used by another terminal device to determine COT.

In an optional implementation, that the reservation message further indicates a priority of a transport block to be sent on the at least one resource includes: The reservation message further indicates a priority of a transport block to be sent on each of the at least one resource; or the reservation message further indicates a second priority, where the second priority is a priority of a transport block of a lowest priority in the transport block to be sent on the at least one resource. The reservation message may indicate the priority of the transport block to be sent on each of the at least one resource, so that the indication is more specific. Alternatively, the reservation message may indicate the priority of the transport block of the lowest priority in the transport block to be sent on the at least one resource, so that overheads of the reservation message can be reduced.

In an optional implementation, the reservation message further indicates a priority of a transport block currently sent by the second terminal device, where the priority of the transport block currently sent by the second terminal device is the same as or different from the priority of the transport block to be sent on the at least one resource. The reservation message is, for example, SCI, or may be another message. For example, in addition to being for reserving the resource, the reservation message is further for scheduling the corresponding transport block. Therefore, the reservation message may further indicate the priority of the currently scheduled (or sent) transport block.

According to a fourth aspect, a communication apparatus is provided. The communication apparatus may be the first terminal device according to any one of the first aspect to the third aspect. The communication apparatus has functions of the first terminal device above. The communication apparatus is, for example, the first terminal device, a large device including the first terminal device, or a functional module, for example, a baseband apparatus or a chip system, in the first terminal device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as the transceiver unit, and the functional module can implement the sending function and the receiving function. Alternatively, the sending unit and the receiving unit may be different functional modules, and the transceiver unit is a general term of these functional modules.

In an optional implementation, the processing unit is configured to determine first duration, where the first duration is duration that is in channel occupancy time COT and that is allocable to another terminal device. The processing unit is further configured to determine a second terminal device and a resource needed by the second terminal device, where the second terminal device includes a terminal device whose data priority is a first priority in the another terminal device, and the first priority is determined in descending order of data priorities of other terminal devices. The processing unit is further configured to: if all resources needed by the second terminal device are fewer than or equal to a remaining resource in the first duration, allocate the resource in the first duration to all terminal devices included in the second terminal device; or if all resources needed by the second terminal device are more than a remaining resource in the first duration, allocate the resource in the first duration to a part of terminal devices included in the second terminal device.

In an optional implementation, the communication apparatus further includes a storage unit (sometimes also referred to as a storage module). The processing unit is configured to be coupled to the storage unit, and execute a program or instructions in the storage unit, to enable the communication apparatus to perform the functions of the first terminal device according to any one of the first aspect to the third aspect.

According to a fifth aspect, a communication apparatus is provided. The communication apparatus may be the second terminal device according to any one of the first aspect to the third aspect. The communication apparatus has functions of the second terminal device above. The communication apparatus is, for example, the second terminal device, a large device including the second terminal device, or a functional module, for example, a baseband apparatus or a chip system, in the second terminal device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the fourth aspect.

In an optional implementation, the transceiver unit (or the receiving unit) is configured to receive sharing information from a first terminal device, where the sharing information indicates a resource that is in COT and that is allocated to the second terminal device. The transceiver unit (or the sending unit) is configured to: if a priority corresponding to the COT is higher than a priority of a first transport block, send a first data packet on the resource allocated to the second terminal device, where the first data packet does not include any data, and the first transport block is a transport block that the second terminal device expects to send.

In an optional implementation, the transceiver unit (or the sending unit) is configured to send a reservation message, where the reservation message is for reserving at least one resource, and the reservation message further indicates information related to a priority of a transport block to be sent on the at least one resource.

In an optional implementation, the communication apparatus further includes a storage unit (sometimes also referred to as a storage module). The processing unit is configured to be coupled to the storage unit, and execute a program or instructions in the storage unit, to enable the communication apparatus to perform the functions of the second terminal device according to any one of the first aspect to the third aspect.

According to a sixth aspect, a communication apparatus is provided. The communication apparatus may be a first terminal device, or may be a chip or a chip system used in the first terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the first terminal device in the foregoing aspects.

According to a seventh aspect, a communication apparatus is provided. The communication apparatus may be a second terminal device, or may be a chip or a chip system used in the second terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the second terminal device in the foregoing aspects.

According to an eighth aspect, a communication system is provided. The communication system includes a first terminal device and a second terminal device. The first terminal device is configured to perform the method performed by the first terminal device according to any one of the first aspect to the third aspect, and the second terminal device is configured to perform the method performed by the second terminal device according to any one of the first aspect to the third aspect. For example, the first terminal device may be implemented by the communication apparatus according to the fourth aspect or the sixth aspect, and the second terminal device may be implemented by the communication apparatus according to the fifth aspect or the seventh aspect.

According to a ninth aspect, a computer-readable storage medium is provided. The computer-readable storage medium is configured to store a computer program or instructions. When the computer program or the instructions are run, the method performed by the first terminal device and/or the second terminal device in the foregoing aspects is implemented.

According to a tenth aspect, a computer program product including instructions is provided. When the computer program product runs on a computer, the method according to the foregoing aspects is implemented.

According to an eleventh aspect, a chip system is provided. The chip system includes a processor and an interface. The processor is configured to invoke instructions from the interface and run the instructions, to enable the chip system to implement the method according to the foregoing aspects.

BRIEF DESCRIPTION OF DRAWINGS

FIG. 1 is a diagram of selecting a resource by a UE;

FIG. 2 is a diagram of an application scenario according to an embodiment of this application;

FIG. 3 is a flowchart of a first resource allocation method according to an embodiment of this application;

FIG. 4 is a diagram of a resource that is in COT and that is allocated by a first UE to another UE according to an embodiment of this application;

FIG. 5 is a diagram of a process of allocating a resource by a first UE to another UE according to an embodiment of this application;

FIG. 6 is a flowchart of a second resource allocation method according to an embodiment of this application;

FIG. 7A is a flowchart of a third resource allocation method according to an embodiment of this application;

FIG. 7B is a diagram of an implementation process of the third resource allocation method according to this embodiment of this application;

FIG. 8 is a flowchart of a communication method according to an embodiment of this application;

FIG. 9 is a diagram of an apparatus according to an embodiment of this application; and

FIG. 10 is a diagram of another apparatus according to an embodiment of this application.

DESCRIPTION OF EMBODIMENTS

To make objectives, technical solutions, and advantages of embodiments of this application clearer, the following further describes embodiments of this application in detail with reference to the accompanying drawings.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between associated objects. For example, A/B indicates A or B. "At least one of the following items (pieces)" or a similar expression thereof indicates any combination of these items, including a single item (piece) or any combination of a plurality of items (pieces). For example, at least one of a, b, or c indicates a, b, c, a and b, a and c, b and c, or a, b, and c, where a, b, and c may be singular or plural.

Ordinal numbers such as "first" and "second" in embodiments of this application are intended to distinguish between a plurality of objects, and are not intended to limit sizes, content, a sequence, a time sequence, priorities, importance, or the like of the plurality of objects. In addition, step numbers in embodiments described in this application are merely intended to distinguish between different steps, but are not intended to limit a sequence of the steps. For example, S301 may be performed before S302, may be performed after S302, or may be simultaneously performed with S302.

The following describes some terms or concepts in embodiments of this application, to facilitate understanding of a person skilled in the art.

(1) In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios. For example, the terminal device includes but is not limited to terminal devices in the following scenarios: cellular communication, device-to-device (device-to-device, D2D), vehicle-to-everything (vehicle-to-everything, V2X), machine-to-machine/machine type communication (machine-to-machine/machine type communication, M2M/MTC), an Internet of things (Internet of things, IoT), virtual reality (virtual reality, VR), augmented reality (augmented reality, AR), industrial control (industrial control), self-driving (self-driving), remote medical surgery (remote medical surgery), a smart grid (smart grid), smart furniture, smart office, smart wearables, smart transportation, a smart city (smart city), an uncrewed aerial vehicle, and a robot. The terminal device may sometimes be referred to as a UE, a terminal, an access station, a UE station, a remote station, a wireless communication device, a user apparatus, or the like. For ease of description, an example in which the terminal device is a UE is used for description in embodiments of this application.

(2) A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB, an eNodeB/eNB, or a gNodeB/gNB), a transmission reception point (transmission reception point, TRP), a subsequently evolved base station in the 3rd generation partnership project (3rd generation partnership project, 3GPP), an access node in a wireless fidelity (wireless fidelity, Wi-Fi) system, a wireless relay node, a wireless backhaul node, or the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller in a cloud radio access network (cloud radio access network, CRAN) scenario, or a central unit (central unit, CU) and/or a distributed unit (distributed unit, DU). Alternatively, the access network device may be a server or the like. For example, a network device in a V2X technology may be a road side unit (road side unit, RSU). An example in which the access network device is a base station is used below for description. The base station may communicate with the terminal device, or may communicate with the terminal device via a relay station. The terminal device may communicate with a plurality of base stations in different access technologies. The core network device is configured to implement mobility management, data processing, session management, policy and charging, and the like. Names of devices that implement core network functions in systems using different access technologies may be different. This is not limited in embodiments this application. A 5th generation (5th generation, 5G) mobile communication system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement functions of the network device may be a network device, or may be an apparatus, for example, a chip system, that can support the network device to implement the functions. The apparatus may be installed in the network device. In the technical solutions provided in embodiments of this application, an example in which the apparatus configured to implement the functions of the network device is a network device is used to describe the technical solutions provided in embodiments of this application.

(3) Unlicensed spectrum and LBT mechanism

In a scenario in which a UE communicates with a base station, a used spectrum resource is classified into a licensed (licensed) spectrum and an unlicensed spectrum. The licensed spectrum can be used only by some organizations or operators, and the unlicensed spectrum is a shared spectrum and can be used by different operators/organizations. To fairly use the unlicensed spectrum, an LBT process (which may also be referred to as a channel access process) needs to be performed before the UE or the base station sends data. If it is determined, through the LBT process, that a channel is busy, the UE or the base station cannot send the data on the channel. If it is determined, through the LBT process, that a channel is idle, the UE or the base station may send the data on the channel.

(4) A UE selects an SL resource.

In NR, SL transmission is performed based on an SL resource pool, where the SL resource pool is also referred to as a resource pool for short. The resource pool is a logical concept. One resource pool may include a plurality of physical resources, and any one of the physical resources may be for SL data transmission. When performing SL data transmission, a UE may select a resource from the resource pool for the transmission. A process of selecting the resource is in two cases. In a case 1, the UE is controlled by a network device, and selects the resource from the resource pool based on an indication of the network device to perform SL data transmission. This is also referred to as a mode (Mode) 1. In a case 2, the UE autonomously selects the resource from the resource pool to perform SL data transmission. This is also referred to as a mode 2.

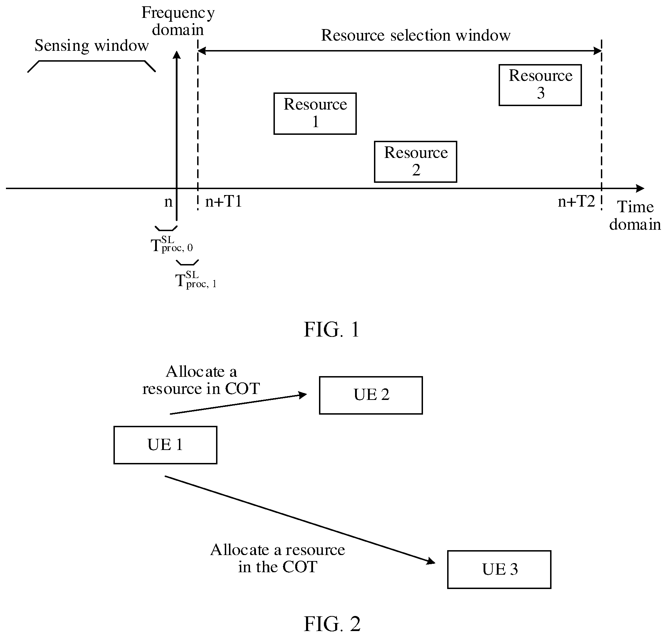

FIG. 1 is a diagram of autonomously selecting a resource by a UE. At a moment n, a physical layer of the UE determines candidate resources in a range of a resource selection window [n+T1, n+T2] based on a sensing result for a sensing window, where the determined candidate resources may form a candidate resource set $S_A$. The physical layer may report $S_A$ to a MAC layer, and then the MAC layer selects the resource from $S_A$. For example, the MAC layer selects a resource 1, a resource 2, and a resource 3 shown in FIG. 1.

(5) SL-U

The SL-U is an important topic that is currently under discussion, and main content is to perform SL transmission in an unlicensed spectrum. Because the unlicensed spectrum is used, two access mechanisms, namely, a type 1 and a type 2, are introduced in standards. The type 1 may be used in a channel preemption scenario, and LBT detection needs to be performed before the SL transmission is performed.

The type 2 may be for sharing a transmission resource preempted by another UE in the type 1. For example, a UE 1 preempts COT in the type 1. In the COT, the UE 1 may further indicate another UE to use, in the type 2, a remaining transmission resource in the COT except a transmission resource occupied by the UE 1. Maximum duration of the COT is related to a data priority, and the data priority is, for example, a service priority (priority) or a channel access priority class (channel access priority class, CAPC). For example, maximum duration of COT corresponding to a CAPC 1 is 2 milliseconds (ms), maximum duration of COT corresponding to a CAPC 2 is 4 ms, and maximum duration of COT corresponding to a CAPC 3 or a CAPC 4 is 6 ms or 10 ms.

In addition, the type 2 may be further classified into several cases such as a type 2A and a type 2B. The type 2A means: Another UE may occupy a channel in COT after 25 $\mu$s elapse since a UE that preempts the COT completes transmission in the COT. For example, the another UE may occupy the channel when determining, through sensing (for example, through LBT detection), that the channel is idle within 25 $\mu$s. The type 2B means: Another UE may occupy a channel in COT after 16 $\mu$s elapse since a UE that preempts the COT completes transmission in the COT.

After preempting COT, a UE (for example a UE 1) may allocate a remaining transmission resource in the COT to one or more UEs. The remaining transmission resource in the COT is a transmission resource that is allocable to another UE and that is in the COT except a resource occupied by the UE 1. However, how to allocate the remaining transmission resource in the COT to another UE is a problem to be urgently resolved.

In view of this, in embodiments of this application, a first UE may allocate resources in COT to other UEs in descending order of data priorities, to enable as much as possible a resource to be preferentially allocated to a UE of a high data priority, and reduce a transmission delay of a high-priority service. When resources are allocated to UEs of a specific priority, the allocation may be performed based on all resources needed by the UEs of the priority, so that resource requirements of all the UEs of the specific priority can be met as much as possible. Even if first duration cannot meet all resources needed by UEs of a specific priority, a resource may be allocated to a part of UEs of the priority, so that as many UEs as possible can obtain resources, to improve a system throughput. In other words, embodiments of this application provide an implementable resource allocation method, and a resource requirement of the another UE is considered during resource allocation, so that a resource allocated to the another UE can better meet the transmission requirement of the another UE, to improve a transmission success rate of the another UE.

The technical solutions provided in embodiments of this application may be applied to a 4th generation mobile communication technology (4th generation, 4G) system, for example, a long term evolution (long term evolution, LTE) system, may be applied to a 5th generation mobile communication technology (5th generation, 5G) system, for example, a new radio (new radio, NR) system, or may be applied to a next generation mobile communication system or another similar communication system, for example, a 6th generation mobile communication technology (6th generation, 6G) system. This is not specifically limited. The technical solutions provided in embodiments of this application may be applied to an SL transmission process, for example, D2D scenarios such as an LTE-D2D scenario or an NR-D2D scenario, or may be applied to V2X scenarios such as an NR-V2X scenario. For example, the technical solutions may be applied to intelligent driving, assisted driving, intelligent connected vehicles, or the like.

FIG. 2 shows a communication network architecture to which an embodiment of this application is applicable. FIG. 2 includes a UE 1, a UE 2, and a UE 3. The UE 1 may perform SL communication with one or more UEs. An example in which the UE 1 can perform SL communication with the UE 2 and the UE 3 is used in FIG. 2. For example, the UE 1 may preempt COT, and may allocate a resource in the COT to the UE 2 and/or the UE 3.

To better describe embodiments of this application, the following describes, with reference to the accompanying drawings, methods provided in embodiments of this application. The methods provided in embodiments of this application may all be applied to the network architecture shown in FIG. 2. For example, a first UE in the methods provided in embodiments of this application may be the UE 1 in FIG. 2; another UE in the methods provided in embodiments of this application may include the UE 2 and/or the UE 3 in FIG. 2, and may further include another UE not shown in FIG. 2; at least one UE in the methods provided in embodiments of this application may include the UE 2 and/or the UE 3 in FIG. 2, and/or include another UE not shown in FIG. 2; a second UE in the methods provided in embodiments of this application may include the UE 2 and/or the UE 3 in FIG. 2, and/or include another UE not shown in FIG. 2; and a third UE in the methods provided in embodiments of this application may be the UE 3 in FIG. 2.

In embodiments of this application, a data priority is, for example, a priority or a CAPC of data, and the data is, for example, SL data. In embodiments of this application, a time domain unit is, for example, a radio frame (radio frame, RF), a subframe (subframe), a slot (slot), a mini-slot (mini-slot), or an orthogonal frequency division multiplexing (orthogonal frequency division multiplexing, OFDM) symbol (symbol). In embodiments of this application, "OFDM symbol" is also referred to as "symbol" for short. In embodiments of this application, "SL" may be referred to as "sidelink", or may be referred to as "sidelink" for short. For example, SL information may be referred to as sidelink information, or referred to as sidelink information for short. In embodiments of this application, allocating a resource to a UE may also be described as sharing a resource with a UE. In other words, in a scenario in which a resource in COT is allocated to a UE, descriptions of "allocation" and "sharing" may be used interchangeably.

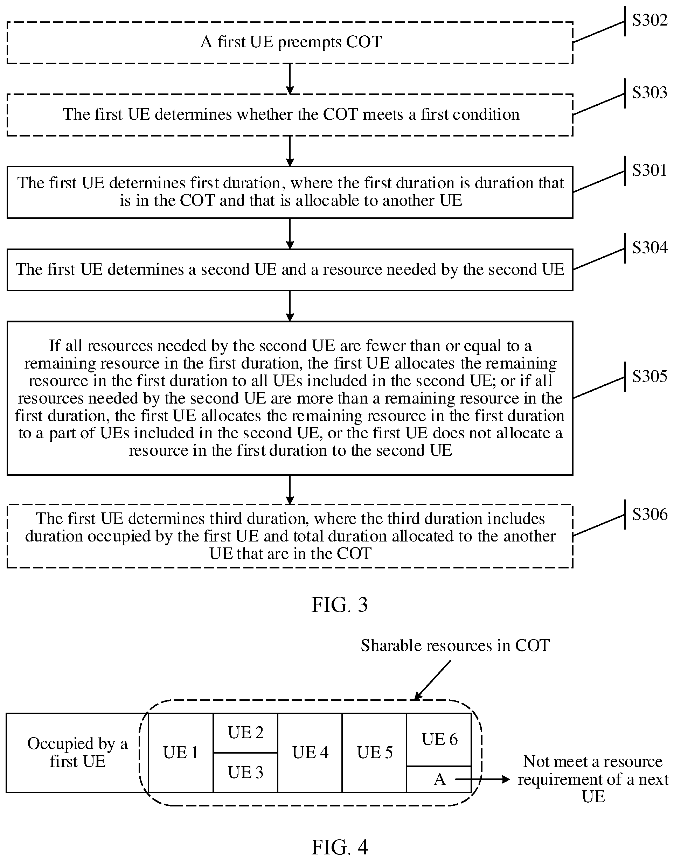

First, a first resource allocation method according to an embodiment of this application is described. FIG. 3 is a flowchart of the method.

S301: A first UE determines first duration. The first duration is duration that is in COT and that is allocable to (or sharable with) another UE, in other words, the first duration is allocable (or sharable) duration in the COT. Optionally, in this case, the "another UE" may be a general term. To be specific, in this case, the first UE may have not determined specific UEs to which resources in the COT are to be allocated. Therefore, the "another UE" may include a UE to which the first UE can allocate a resource, and/or include a UE to which the first UE cannot allocate a resource. S301 is performed, for example, by a physical layer of the first UE.

The COT may be COT preempted by the first UE in an unlicensed spectrum. For example, before S301, the method further includes S302 in which the first UE may preempt the COT. After preempting the COT, the first UE may determine the duration that is in the COT and that is sharable with the another UE, namely, the first duration. Optionally, the first UE may further occupy corresponding duration in the COT. In this case, duration in the COT may include the duration occupied by the first UE and the first duration, and optionally further include duration (or referred to as unavailable duration) that is in the COT and that cannot be occupied by any UE. Optionally, the first duration may be determined based on maximum duration of the COT, data transmission duration of the first UE in the COT (or the duration occupied by the first UE in the COT), and a data processing delay of the another UE. For example, the first duration is determined based on the maximum duration of the COT, the data transmission duration of the first UE in the COT, and the data processing delay. In a determining manner, the first duration satisfies the following relationship:

$$\text{First duration} = \text{Maximum duration of the COT} - \max\{T_{\text{delay}}, T_{\text{demand}}\} \quad \text{(formula A)}$$

In the formula A, max{x, y} indicates selection of a larger value between x and y. $T_{\text{delay}}$ represents the data processing delay. $T_{\text{demand}}$ represents the data transmission duration of the first UE in the COT.

A data processing delay of a UE is, for example, a processing delay of SL data that the UE determines to transmit (or a physical sidelink shared channel (physical sidelink shared channel, PSSCH) that the UE determines to transmit). The data processing delay of the UE is, for example, a value predefined in a protocol or preconfigured in the UE. Different UEs may have a same data processing delay. In this case, the first UE may determine the data processing delay of the another UE based on predefined or preconfigured information. For example, refer to FIG. 1. $T_{\text{delay}}$ may alternatively be represented as $T_{\text{proc},0}^{\text{SL}}$, and may be duration between an end moment of a sensing window and a moment n in FIG. 1.

A medium access control (media access control, MAC) layer of the first UE may estimate an amount of SL data to be sent by the first UE, to estimate the data transmission duration of the first UE in the COT. The physical layer of the first UE may learn of the data transmission duration of the first UE in the COT from the MAC layer.

Optionally, the maximum duration of the COT may be determined based on a data priority of the first UE, and the data priority of the first UE is, for example, a priority of SL data currently sent by the first UE. In this case, the first UE may determine the maximum duration of the COT based on the data priority of the first UE without considering another factor. Therefore, implementation is simple. For example, if a CAPC of the first UE is 1, the maximum duration of the COT is 2 ms; or if a CAPC of the first UE is 2, the maximum duration of the COT is 4 ms.

Alternatively, the maximum duration of the COT may be determined based on a lowest priority in a data priority of the first UE and a data priority of at least one UE. In this case, the at least one UE is, for example, a potential UE with which a resource may be shared. For example, the first UE allocates a resource in the COT to all or a part of the at least one UE. For example, the another UE may include all or a part of the at least one UE, or the another UE may not include the at least one UE. For example, the first UE may receive a reservation message or assistance information from the at least one UE, to obtain a data priority of the at least one UE. In this case, the at least one UE may serve as the potential UE with which the resource may be shared, in other words, a UE corresponding to a reservation message or assistance information received by the first UE may serve as the potential UE with which the resource may be shared. The step in which the first UE receives the reservation message or the assistance information may occur before or after S301. For another example, the first UE and the at least one UE belong to one UE group. In this case, the at least one UE may be the potential UE with which the resource may be shared. For still another example, the first UE and the at least one UE are in an information sending and receiving relationship. In this case, the at least one UE may be the potential UE with which the resource may be shared.

There may be one or more UEs in the at least one UE, and the one or more UEs include, for example, a third UE. For example, regardless of which manner is for determining the potential UE with which the resource may be shared, the third UE may send a reservation message, where the reservation message may indicate a data priority of the third UE, and the data priority of the third UE includes, for example, a priority of SL data currently sent by the third UE and/or a priority of SL data that the third UE expects to send on a reserved resource. Using an example in which the reservation message is sidelink control information (sidelink control information, SCI), the SL data currently sent by the third UE is, for example, SL data scheduled by using the SCI. In addition, the reservation message may further indicate the resource reserved by the third UE, and the SL data that the third UE expects to send on the reserved resource is, for example, SL data that the third UE expects to send on the reserved resource. The first UE may determine the lowest priority in the data priority of the first UE and the data priority of the at least one UE, and determine the maximum duration of the COT based on the lowest priority. For example, the at least one UE includes the third UE, the data priority of the third UE is a CAPC 1, and the data priority of the first UE is a CAPC 2. In this case, the first UE may determine that the lowest priority is the CAPC 2, and determine that the maximum duration of the COT is 4 ms. A lower data priority indicates longer maximum duration of corresponding COT, so that the first UE can determine longer COT, to obtain more resources.

In addition, optionally, the maximum duration of the COT may be related to a first subcarrier spacing, and the first subcarrier spacing is, for example, a subcarrier spacing currently used by the first UE. For example, the first subcarrier spacing is 15 kHz, 30 kHz, or 60 kHz. A unit of the maximum duration of the COT may be a slot. For example, the maximum duration of the COT is a maximum value that is of a quantity of slots occupied by the COT and that is determined based on the first subcarrier spacing, or the maximum duration of the COT is a maximum value that is of a quantity of slots occupied by the COT and that is determined based on the first subcarrier spacing and a second priority. The second priority is the data priority described above that is for determining the maximum duration of the COT. It can be learned from the foregoing that the second priority is, for example, the data priority of the first UE or the lowest priority in the data priority of the first UE and the data priority of the at least one UE.

For example, if the second priority is a CAPC 3 or a CAPC 4, the COT may occupy 6 ms or 10 ms. If the first subcarrier spacing is 15 kHz, the maximum duration of the COT is six slots or 10 slots; or if the first subcarrier spacing is 30 kHz, the maximum duration of the COT is 12 slots or 20 slots.

Optionally, the first UE may perform S301 when the COT meets a first condition. For example, after preempting the COT, the first UE may further perform S303. S303 is: Determine whether the COT meets the first condition. For example, S303 is performed by the physical layer of the first UE. If the COT meets the first condition, the first UE may perform S301. If the COT does not meet the first condition, the first UE may not perform S301. The first condition includes, for example, one or more of a condition 1, a condition 2, or a condition 3.

The condition 1 includes: For example, the maximum duration of the COT is greater than or equal to second duration. The second duration may be determined based on a period of time in which a UE receives sharing information and the data processing delay of the another UE. The sharing information may also be referred to as COT-sharing information, and may be sent by the first UE. For example, after determining a resource that is in the COT and that is to be shared with the another UE, the first UE may send the sharing information to indicate the resource to be shared with the another UE. The period of time in which the UE receives the sharing information may be predefined in a protocol, or may be preconfigured in the UE. For example, the period of time is one slot (slot). Optionally, the second duration is, for example, a sum of the period of time in which the UE receives the sharing information, the data processing delay of the another UE, and a second value. Units of the period of time in which the UE receives the sharing information, the data processing delay, and the second value may all be the slot. For example, the second value is one slot. The condition 1 is to ensure that the UE that receives the sharing information can use a resource indicated by the sharing information.

For example, the maximum duration of the COT is 2 ms. Using an example in which the subcarrier spacing is 15 kHz, the maximum duration of the COT is two slots. For example, the period of time in which the UE receives the sharing information is one slot, and the data processing delay of the another UE is also one slot. In this case, the second duration is three slots. It can be learned that the maximum duration of the COT is less than the second duration. For example, the first UE sends the sharing information in a 1st slot in the two slots, and the UE that receives the sharing information receives the sharing information in the 1st slot, and determines a to-be-transmitted PSSCH in a 2nd slot in the two slots. In this case, the COT ends, and the UE that receives the sharing information cannot send the PSSCH in the COT. Therefore, to enable the UE that receives the sharing information to send the PSSCH on the resource indicated by the sharing information, the maximum duration of the COT may be greater than or equal to the second duration.

The condition 2 includes: For example, a difference obtained by subtracting the data transmission duration of the first UE in the COT from the maximum duration of the COT is greater than 0. The condition 2 may be understood as ensuring that in the COT, there is sharable remaining duration other than the duration occupied by the first UE. Optionally, the physical layer of the first UE may obtain, from the MAC layer of the first UE, a quantity of slots needed by the first UE for data transmission. The quantity may be used as the data transmission duration of the first UE in the COT.

The condition 3 includes: For example, the data transmission duration of the first UE in the COT is greater than or equal to a first threshold. The first threshold may be determined based on the data processing delay of the another UE. For example, the first threshold is a threshold related to the data processing delay, or the first threshold is equal to the data processing delay. If the data transmission duration of the first UE in the COT is less than the first threshold, it indicates that there is a small amount of SL data to be sent by the first UE. In this case, to ensure that the COT is not interrupted, the first UE may need to perform repeated transmission in the COT to occupy a channel. This causes a resource waste. Therefore, resource utilization can be improved by using the condition 3.

S304: The first UE determines a second UE and a resource needed by the second UE. For example, S304 is performed by the physical layer of the first UE.

For example, the second UE may include a UE whose data priority is a first priority in the at least one UE, and the first priority is determined in descending order of the data priority of the at least one UE. For example, if the another UE includes the at least one UE, it may also be considered that the second UE may include a UE whose data priority is the first priority in the another UE.

In this embodiment of this application, the first UE may allocate resources in the first duration to other UEs in descending order of the data priorities, until a remaining resource in the first duration is insufficient for a resource needed by a next UE to which a resource is to be allocated. Optionally, when the remaining resource in the first duration is insufficient for the resource needed by the next UE to which the resource is to be allocated, whether to stop an allocation process, whether to continue to allocate a resource to the next UE to which the resource is to be allocated, how to continue to allocate a resource to the next UE to which the resource is to be allocated, or the like may be specifically implemented by a UE. For example, when the remaining resource in the first duration is insufficient for the resource needed by the next UE to which the resource is to be allocated, the allocation may be stopped, and no resource continues to be allocated to the next UE to which the resource is to be allocated. Alternatively, when the remaining resource in the first duration is insufficient for the resource needed by the next UE to which the resource is to be allocated, the remaining resource in the first duration may still be allocated to the next UE to which the resource is to be allocated, and the allocation process may not be stopped until the resource in the first duration is completely allocated.

Optionally, "insufficient for the resource needed by the next UE to which the resource is to be allocated" may include: insufficient for all resources needed by all UEs (namely, all UEs to which resources have not been allocated) corresponding to a data priority for which resources are to be allocated. For example, the first UE allocates resources to UEs of a data priority A, and currently, may have allocated a resource to a part of UEs of the data priority A, or may have not allocated a resource to any UE of the data priority A. That the remaining resource in the first duration is insufficient for the resource needed by the next UE to which the resource is to be allocated may mean: The remaining resource in the first duration is insufficient for all resources needed by all UEs that correspond to the data priority A and to which resources have not been allocated.

The resource that is in the first duration and that is allocated by the first UE may include the first duration in time domain, and may include one or more resource block (resource block, RB) sets (sets), one or more sub-channels (subchannels), or one or more interlaced (interlaced) frequency domain resource blocks in frequency domain. That the remaining resource in the first duration is insufficient for the resource needed by the next UE to which the resource is to be allocated includes: For example, the remaining resource in the first duration is insufficient for a time domain resource, a frequency domain resource, and/or the like needed by the next UE to which the resource is to be allocated.

As described above, the first UE may receive a reservation message or assistance information from the another UE. In addition to indicating the data priority of the another UE, the reservation message or the assistance information may further indicate a resource reserved by the another UE, so that the first UE can learn of, based on the resource reserved by the another UE, a resource needed by the another UE. For example, a resource reserved by a UE may be a resource needed by the UE, namely, a resource requirement of the UE. For example, the another UE includes the third UE, and the third UE may send the reservation message, where the reservation message may indicate the resource reserved by the third UE, for example, a time domain resource and/or a frequency domain resource reserved by the third UE, so that the first UE may determine a resource requirement of the third UE based on the SCI. Alternatively, the first UE may determine, in another manner, a resource needed by the another UE. For example, in a process of communicating with a UE, the first UE may learn of a resource needed by the UE, and does not need to receive a reservation message, assistance information, or the like from the UE.

As described above, the maximum duration of the COT may be determined in different manners, and a UE with which the first UE shares a resource may vary with the determining manner. For example, if the maximum duration of the COT is determined based on the data priority of the first UE, the UE with which the first UE shares the resource is, for example, a UE whose data priority is equal to or higher than the data priority of the first UE. Optionally, the data priority herein is, for example, a CAPC, and a value range of the CAPC is, for example, [1, 2, 3, 4]. Alternatively, the data priority herein is, for example, a priority, and a value range of the priority is, for example, [0, 7]. In this case, the first UE may obtain, through screening, the UE whose data priority is equal to or higher than the data priority of the first UE, for example, the at least one UE described in S301. Then, the first UE may perform S304. The first priority is a specific data priority corresponding to the at least one UE. For example, in descending order of the data priority of the at least one UE, the first UE should then allocate the resource in the first duration to a UE of a priority A. In this case, the priority A is the first priority. For example, a reservation message or assistance information may further indicate a data priority of a sending end of the reservation message or the assistance information. The data priority includes, for example, a priority of SL data currently sent by the sending end and/or a priority of SL data that the sending end expects to send on a reserved resource. The first UE may determine, based on the data priority indicated by the reservation message or the assistance information, the UE whose data priority is higher than or equal to the data priority of the first UE, to allocate the resource in the first duration to the UE. A larger value of a data priority indicates a lower data priority (for example, a larger value of a CAPC indicates a lower CAPC). Therefore, the first UE may determine a UE whose value of a data priority is less than or equal to a value of the data priority of the first UE, and allocate the resource in the first duration to the UE. A larger value of a data priority indicates a lower data priority, and may indicate longer maximum duration of corresponding COT. Therefore, if the data priority of the first UE is lower than a data priority of a specific UE, the maximum duration of the COT corresponding to the first UE may be greater than maximum duration of COT corresponding to the UE. Therefore, the resource shared by the first UE can meet a requirement of the UE.

Alternatively, if the maximum duration of the COT is determined based on the lowest priority in the data priority of the first UE and the data priority of the at least one UE, the UE with which the first UE shares the resource includes, for example, any one or more of a UE whose data priority is equal to the data priority of the first UE, a UE whose data priority is lower than the data priority of the first UE, or a UE whose data priority is higher than the data priority of the first UE. This may be understood as: If the maximum duration of the COT is determined based on the lowest priority in the data priority of the first UE and the data priority of the at least one UE, a data priority of the UE with which the first UE shares the resource is not limited. In this case, the first UE may not need to perform screening on UEs based on data priorities. For example, the first UE may determine, depending on whether a reservation message or assistance information is received, a UE to which a resource is to be allocated; or determine, based on a sending and receiving relationship, whether the first UE and the at least one UE belong to the same UE group, or the like, a UE to which a resource is to be allocated. For example, the first UE determines the at least one UE described in S301, and then the first UE may perform S304. The first priority is a specific data priority corresponding to the at least one UE. For example, in descending order of the data priority of the at least one UE, the first UE should then allocate the resource in the first duration to a UE of a priority A. In this case, the priority A is the first priority.

If the first UE determines, based on a data priority of a remaining UE that is in the at least one UE and to which a resource is to be allocated, that the first priority is a highest priority in the data priority corresponding to the remaining UE, the first UE may determine a UE (the second UE) of the first priority in the remaining UE, and allocate the resource in the first duration to the second UE. There may be one or more second UEs. If the first UE initially allocates the resource in the first duration to the at least one UE, the first priority is, for example, a highest priority in the data priority corresponding to the at least one UE. Alternatively, if the first UE has previously allocated the resource in the first duration to a part of UEs in the at least one UE, and currently allocates the resource in the first duration to a remaining UE in the at least one UE, the first priority may not be a highest priority in the data priority corresponding to the at least one UE, but is a highest priority in a data priority corresponding to the remaining UE in the at least one UE.

S305: If all resources needed by the second UE (for example, resources needed by all UEs included in the second UE) are fewer than or equal to a remaining resource in the first duration, the first UE allocates the remaining resource in the first duration to all the UEs included in the second UE; or if all resources needed by the second UE are more than a remaining resource in the first duration, the first UE allocates the remaining resource in the first duration to a part of UEs included in the second UE, or the first UE may not allocate a resource in the first duration to the second UE. Optionally, if the first UE allocates the resources in the first duration to all the UEs included in the second UE, when the first UE is to complete allocating the resources to all the UEs included in the second UE, the first UE may continue to determine a UE of a highest data priority in UEs to which resources have not been allocated, to continue to allocate a remaining resource in the first duration to the UEs. For this process, refer to S305.

If the first UE determines the second UE, the first UE may determine the resource needed by the second UE. For example, if the first UE has received a reservation message or assistance information from the second UE, the first UE may determine, based on the reservation message or the assistance information, the resource needed by the second UE, or the first UE may determine, in another manner, the resource needed by the second UE.

For example, the first UE determines the resources needed by all the UEs included in the second UE. In this case, if all the resources needed by the second UE (for example, the resources needed by all the UEs included in the second UE) are fewer than or equal to the remaining resource in the first duration, the first UE may allocate the remaining resource in the first duration to all the UEs included in the second UE. The remaining resource in the first duration is a remaining available resource in the first duration, namely, a remaining resource that is allocable to the another UE. For example, the resource in the first duration includes all resources in the first duration, and the all resources may include a resource that is in the first duration and that is allocable to the another UE. This may be understood as: All the resources in the first duration may include a resource that is in the first duration and that has been allocated to the another UE and a resource that is in the first duration and that has not been allocated but is allocable to the another UE. For example, if the first UE has not allocated the resource in the first duration to the another UE before allocating the resource in the first duration to the second UE, when the first UE allocates a resource to the second UE, the remaining resource in the first duration includes a part or all of the resources in the first duration. Alternatively, if the first UE has allocated the resource in the first duration to the another UE before allocating the resource in the first duration to the second UE, when the first UE allocates a resource to the second UE, the remaining resource in the first duration includes a part or all of the resources in the first duration except a resource that has been allocated to the another UE. The resource allocated to the second UE may be a part or all of the remaining resource in the first duration. If a part of duration in the first duration has been allocated to the first UE, the remaining resource in the first duration includes a part or all of resources in the first duration except a resource occupied by the first UE (and the resource that has been allocated to the another UE). During the allocation, the first UE may randomly allocate the remaining resource in the first duration to the UEs included in the second UE, or the first UE may allocate, in a corresponding sequence, the remaining resource in the first duration to the UEs included in the second UE. For example, the first UE may allocate, in descending or ascending order of values of a first parameter, the remaining resource in the first duration to the UEs included in the second UE. This is not limited. For example, the first parameter is a parameter corresponding to a resource requirement of a UE, and includes, for example, a quantity of resources needed by the UE and/or a cycle (for example, referred to as a resource cycle) of a needed resource.

After the remaining resource in the first duration is allocated to all the UEs included in the second UE, if there is still a UE that is other than the second UE in the at least one UE and to which a resource has not been allocated, and there is still an allocable resource in the first duration, in other words, there is still a remaining resource in the first duration (as the resource allocation process proceeds, the remaining resource in the first duration decreases, and an allocated resource is not included in the remaining resource), the first UE may continue to determine a third priority in descending order of data priorities, where the third priority may be a highest priority in data priorities corresponding to UEs that are included in the at least one UE and to which resources have not been allocated. The first UE determines a UE of the third priority in the at least one UE and a resource needed by the UE, and allocates the remaining resource in the first duration to the UE in the manner described in S305 (in this case, the remaining resource in the first duration does not include the resource that has been allocated to the second UE). Details are not described. By analogy, the first UE may sequentially allocate the remaining resource in the first duration to the UE in the at least one UE in descending order of the data priorities, until the remaining resource in the first duration is insufficient for the resource needed by the next UE that is in the at least one UE and to which the resource is to be allocated, until the remaining resource in the first duration is completely allocated, or until the remaining resource in the first duration is insufficient for all resources needed by all UEs corresponding to a next data priority. The next data priority is a data priority that is determined by the first UE in descending order of the data priorities and that corresponds to the next UE to which the resource is to be allocated.

For example, the first UE may determine a lowest priority for which a resource requirement can be met by using the resource in the first duration, to ensure that resources are allocated to all UEs whose priorities are higher than or equal to the priority, and therefore enable as much as possible a UE of a high priority to preferentially obtain a resource.

Using an example in which the first UE determines the resources needed by all the UEs included in the second UE, the foregoing describes a case in which all the resources needed by the second UE are fewer than or equal to the remaining resource in the first duration, and it is also possible that all the resources needed by the second UE are more than the remaining resource in the first duration. In this case, because the remaining resource in the first duration is insufficient, the first UE cannot allocate the remaining resource in the first duration to all the UEs included in the second UE. To enable resources to be allocated to as many UEs as possible, the first UE may allocate the remaining resource in the first duration to a part of UEs included in the second UE. Alternatively, the first UE may not allocate the resource in the first duration to any UE in the second UE.

If all the resources needed by the second UE are more than the remaining resource in the first duration, in an optional implementation, the first UE may not allocate the resource in the first duration to any UE in the second UE, and the allocation process is stopped. Alternatively, if the remaining resource in the first duration is greater than 0, the first UE may allocate the remaining resource in the first duration to a specific UE included in the second UE. After the remaining resource in the first duration is completely allocated, the allocation process is stopped. How to select the specific UE may be implemented by a UE. For example, the specific UE may be randomly selected, or may be determined based on the first parameter. Optionally, in this case, the remaining resource in the first duration may be fewer than a resource needed by any UE included in the second UE.

Alternatively, in another optional implementation, the first UE may sequentially allocate the remaining resource in the first duration to the part of UEs included in the second UE, until a remaining resource in the first duration is insufficient to be allocated to a next UE included in the second UE, or until the remaining resource in the first duration is completely allocated. A quantity of the part of UEs is, for example, 1 or more. Optionally, in this case, the remaining resource in the first duration is more than or equal to all resources needed by the part of UEs included in the second UE.

If the first UE allocates the remaining resource in the first duration to the part of UEs included in the second UE, an allocation sequence may be random allocation. For example, during each time of allocation, the first UE randomly selects one UE from remaining UEs in the second UE, and allocates a resource to the UE, until a remaining resource in the first duration is insufficient for a resource needed by a next UE that is included in the at least one UE and to which a resource is to be allocated, or until the resource in the first duration is completely allocated.

Alternatively, an allocation sequence of the first UE may be determined based on the first parameter. For example, the first UE sequentially allocates the remaining resource in the first duration to the part of UEs in descending or ascending order of values of the first parameter, until a remaining resource in the first duration does not meet a resource requirement of a next UE to which a resource is to be allocated, or until the resource in the first duration is completely allocated. In this case, the next UE to which the resource is to be allocated is, for example, a specific UE included in the second UE. For descriptions of the first parameter, refer to the foregoing descriptions.

For example, UEs of the first priority that are determined by the first UE include a UE 1 to a UE 7. The first UE may determine all resources needed by the seven UEs. If all the resources needed by the seven UEs are fewer than or equal to the remaining resource in the first duration (namely, an available resource in the first duration), the first UE may sequentially allocate the remaining resource in the first duration to the seven UEs. An allocation sequence may be random allocation. Alternatively, if all the resources needed by the seven UEs are more than the remaining resource in the first duration, the first UE may sequentially allocate the remaining resource in the first duration to the seven UEs in descending or ascending order of values of the first parameter. For example, the first parameter includes the quantity of resources needed by the UE, and the first UE may sequentially allocate the remaining resource in the first duration to the seven UEs in descending or ascending order of quantities of resources needed by the UEs. An allocation process is not stopped until a remaining resource in the first duration is insufficient for a resource needed by a next UE that is in the seven UEs and to which a resource is to be allocated, and the first UE does not allocate the remaining resource in the first duration to the next UE to which the resource is to be allocated. For another example, the first parameter includes the cycle of the resource needed by the UE. The first UE may sequentially allocate the remaining resource in the first duration to the seven UEs in descending order or ascending order of cycles of resources needed by the UEs. An allocation process is not stopped until a remaining resource in the first duration is insufficient for a resource needed by a next UE that is in the seven UEs and to which a resource is to be allocated, and the first UE does not allocate the remaining resource in the first duration to the next UE to which the resource is to be allocated. Alternatively, an allocation process is not stopped until the resource in the first duration is completely allocated. In this case, for a last UE to which a resource is allocated, the resource allocated to the UE may be more than or equal to a resource needed by the UE, or may be fewer than a resource needed by the UE. However, even if the resource allocated to the UE is fewer than the resource needed by the UE, the UE still has an available resource. This can improve resource utilization and data transmission efficiency of the UE.

If a quantity of UEs of a specific priority in the at least one UE is 1, all resources needed by the UE of the priority are a resource needed by the UE. For example, the first duration includes five slots, and occupies one RB set in frequency domain. The first UE obtains, through screening, the UE 1, the UE 2, the UE 3, the UE 4, the UE 5, the UE 6, and the UE 7 based on values of data priorities, and the seven UEs are UEs to which the first UE is to allocate resources. A sequence of the data priorities of the seven UEs is: the UE 1 > the UE 2 > the UE 3 > the UE 4 > the UE 5 > the UE 6 > the UE 7. The first UE sequentially allocates the resource in the first duration to the seven UEs based on the sequence. For example, after allocating a resource to the UE 1, the first UE continues to allocate a resource to the UE 2. The rest can be deduced by analogy. After a resource is allocated to the UE 6, a remaining resource included in the first duration is insufficient for a resource needed by the UE 7. For example, if a time domain resource needed by the UE 7 is more than a remaining time domain resource included in the first duration, a resource allocation process may be stopped, the remaining resource in the first duration is no longer allocated, and the first UE does not allocate the resource in the first duration to the UE 7. Alternatively, after a resource is allocated to the UE 6, if a remaining resource included in the first duration is insufficient for a resource needed by the UE 7, or is insufficient for all resources needed by all UEs corresponding to a data priority A, the remaining resource included in the first duration may be allocated to the UE 7, or may be allocated to any UE corresponding to the data priority A. In this case, the resource allocated to the UE 7 or the any UE is fewer than the resource needed by the UE 7. The data priority A is a data priority of the UE 7.

For example, after allocating the resource in the first duration to a specific UE, the first UE may exclude a resource allocated to the UE from the resource included in the first duration. After the exclusion, a resource that is included in the first duration and that is allocable to the another UE does not include the resource allocated to the UE, and the resource that is allocable to the another UE is a current remaining resource in the first duration. For example, refer to FIG. 4. The resource included in the first duration is shown in a dashed box in FIG. 4. In addition, the first duration further includes the resource occupied by the first UE. For example, if the first UE allocates a resource shown by "UE 1" in FIG. 4 to the UE 1, the first UE excludes the resource from the resource included in the first duration, and a remaining resource in the first duration does not include the resource shown by "UE 1". Then, the first UE allocates a resource shown by "UE 2" in FIG. 4 to the UE 2, and also excludes the resource from the resource included in the first duration, and a remaining resource in the first duration does not include the resource shown by "UE 1" and the resource shown by "UE 2". The rest can be deduced by analogy. After allocating a resource shown by "UE 6" in FIG. 4 to the UE 6, the first UE excludes the resource from the resource included in the first duration. In this case, a remaining resource included in the first duration is a resource shown by "A". If the resource does not meet a resource requirement of the UE 7, a resource allocation process may be stopped, the remaining resource in the first duration is no longer allocated, and the first UE does not allocate the resource in the first duration to the UE 7. Alternatively, the first UE may allocate the resource shown by "A" in FIG. 4 to the UE 7, and the resource may be fewer than the resource needed by the UE 7. In FIG. 4, an example in which duration of the resources allocated by the first UE to the six UEs is the same is used. An actual case is not limited thereto, and duration allocated to different UEs may alternatively be different.

As described above, the first UE may determine the resource needed by the second UE, and allocate the resource in the first duration to the second UE. For example, the first UE may determine, based on the reservation message or the assistance information from the second UE, the resource needed by the second UE, or the first UE may determine, in another manner, the resource needed by the second UE. Optionally, a resource allocated by the first UE to a UE may be completely consistent with a resource needed by the UE (where the consistency includes time domain consistency and frequency domain consistency). For example, a reservation message sent by the UE 2 indicates that the UE 2 reserves a slot 1 and a sub-channel 1, and a reservation message sent by the UE 3 indicates that the UE 3 reserves slots 2 and 3 and a sub-channel 2. For example, the UE 2 and the UE 3 are UEs that are determined by the first UE based on the data priorities and to which resources are to be allocated, and the data priority of the UE 2 is higher than the data priority of the UE 3. In this case, the first UE may sequentially allocate the slot 1 and the sub-channel 1 to the UE 2 and allocate the slots 2 and 3 and the sub-channel 2 to the UE 3.

Alternatively, when allocating a resource to a UE, the first UE may consider a resource needed by the UE, but the resource allocated by the first UE to the UE is not necessarily completely consistent with the resource needed by the UE. For example, a reservation message sent by the UE 2 indicates that the UE 2 reserves a slot 1 and a sub-channel 1, and a reservation message sent by the UE 3 indicates that the UE 3 reserves a slot 3 and a sub-channel 2. The slot 1, a slot 2, and the slot 3 are three consecutive slots in time domain. In time domain, the slot 2 is after the slot 1, and the slot 3 is after the slot 2. For example, the UE 2 and the UE 3 are UEs that are determined by the first UE based on the data priorities and to which resources are to be allocated, and the data priority of the UE 2 is higher than the data priority of the UE 3; and after the first UE allocates a resource to the UE 2, a next UE to which a resource is to be allocated is the UE 3. In this case, the first UE may consider resource continuity in the COT. If the first UE allocates the slot 1 to the UE 2 and allocates the slot 3 to the UE 3, the slot 2 in the COT is vacated, and the slot does not necessarily meet a resource requirement of a subsequent UE to which a resource is to be allocated (for example, the subsequent UE may need a plurality of slots). As a result, a "hole" may occur in the COT, and the slot 2 may be preempted by another UE. Consequently, transmission performed by a UE after the slot 2 conflicts with transmission performed by the UE that preempts the resource. In view of this, in this embodiment of this application, the first UE may allocate the slot 1 to the UE 2, and allocate the slot 2 instead of the slot 3 to the UE 3. In this way, a slot quantity requirement of the UE 3 is met, and the "hole" is avoided in the COT, to reduce a resource conflict probability and improve a transmission success rate.

It can be learned from the foregoing allocation process that a sharable resource in the COT is the resource in the first duration, and a resource actually allocated by the first UE may include a part or all of the resource in the first duration, in other words, not all the resources in the first duration are necessarily resources actually allocated by the first UE. Therefore, optionally, the method may further include S306: The first UE determines third duration, where the third duration may include the duration occupied by the first UE in the COT (namely, the data transmission duration of the first UE in the COT) and total duration that is in the COT and that is allocated to the another UE. This may be understood as: The third duration is duration actually occupied by the first UE and the another UE in the COT. The third duration may be less than or equal to the maximum duration of the COT. It can be learned that the third duration is limited by the maximum duration of the COT.

The data transmission duration of the first UE in the COT is short, and for example, is less than or equal to a first threshold, where the first threshold may be predefined in a protocol or preconfigured in the UE, and for example, is one slot. In this case, if the first UE needs to share the resource in the COT, the processing delay of the another UE may be considered. Therefore, optionally, in this case, the data transmission duration of the first UE in the COT may be equal to (the data processing delay + 1), and is in a unit of, for example, a slot.

Alternatively, even if the data transmission duration of the first UE in the COT is short, and for example, is less than or equal to a first threshold, duration indicated by the MAC layer of the first UE instead of (the data processing delay + 1) may be used as the data transmission duration of the first UE in the COT. In this case, the first UE may occupy the resource in the COT through repeated transmission. For example, the first UE may occupy a $1^{st}$ time domain unit to a (data processing delay + 1)$^{th}$ time domain unit in the COT to perform SL transmission, where the SL transmission may include the repeated transmission, to avoid interruption of the COT.

For example, S306 is performed by the physical layer of the first UE. Optionally, after S306, the physical layer of the first UE may send indication information to the MAC layer of the first UE. The indication information may indicate the third duration, or may indicate the total duration that is in the COT and that is allocated to the another UE. The MAC layer may select the resource for the first UE with reference to the indication information. For example, the MAC layer may select the resource for the first UE based on the data transmission duration of the first UE in the COT.

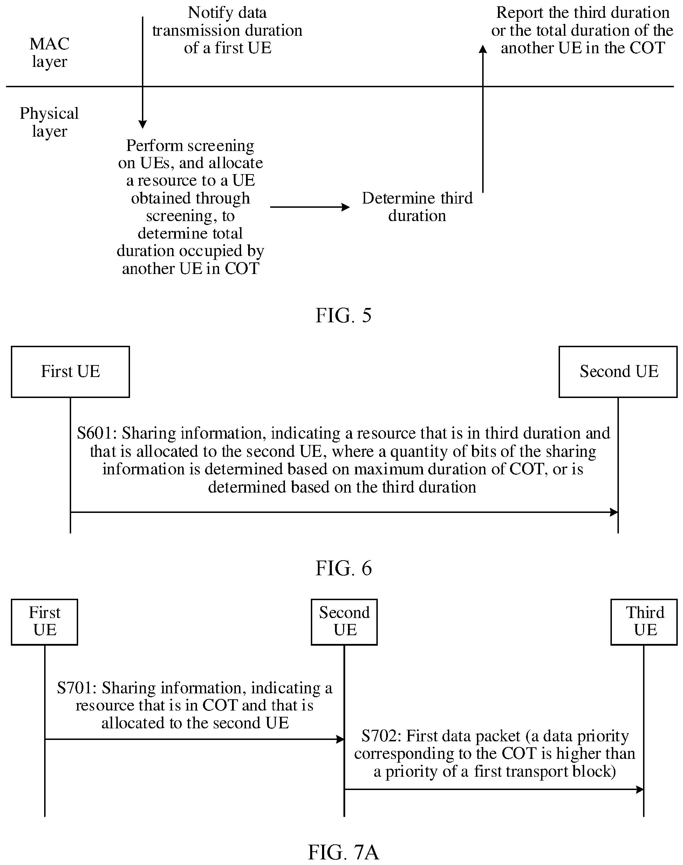

For example, FIG. 5 is a diagram of a process of allocating a resource by the first UE. The MAC layer of the first UE may notify the data transmission duration of the first UE to the physical layer of the first UE. The physical layer may perform screening on UEs in descending order of data priorities, and allocate a resource to a UE that is screened out. In this case, the physical layer can determine the total duration occupied by the another UE in the COT. Further, the physical layer may determine the third duration, where the third duration includes the data transmission duration of the first UE in the COT and the total duration that is in the COT and that is allocated to the another UE. The physical layer may notify the MAC layer of the first UE of the third duration or the total duration that is in the COT and that is allocated to the another UE, so that the MAC layer may select the resource based on the third duration or the total duration.

In addition, optionally, after allocating the resource in the first duration to the another UE, the first UE may send the sharing information to the another UE. This step may occur after S306. For example, if the first UE allocates the resource in the first duration to the second UE, the first UE may send sharing information to the second UE, where the sharing information may indicate the resource allocated to the second UE, so that the second UE may use the resource allocated by the first UE.

In this embodiment of this application, the first UE may allocate resources in the COT to other UEs in descending order of the data priorities, to enable as much as possible a resource to be preferentially allocated to a UE of a high data priority, and reduce a transmission delay of a high-priority service. In addition, a resource requirement of the another UE is considered during the resource allocation, so that a resource allocated to the another UE can better meet the transmission requirement of the another UE, to improve a transmission success rate of the another UE.

As described above, after allocating the resource to the another UE, the first UE may send the sharing information to the another UE to indicate the allocated resource. Currently, a quantity of bits (bits) occupied by the sharing information is determined based on the maximum duration of the COT. A large quantity of bits are determined by using this method, and consequently transmission overheads of the sharing information are high. The following describes a second resource allocation method provided in an embodiment of this application. Transmission overheads of the sharing information can be reduced by using the method. FIG. 6 is a flowchart of the method.

S601: A first UE sends sharing information to a second UE. Correspondingly, the second UE receives the sharing information from the first UE.

The sharing information may indicate a resource allocated to the second UE, and the resource may be located in third duration. The second UE may use, based on the indication by the sharing information, the resource allocated to the second UE. For descriptions of the third duration, refer to the embodiment shown in FIG. 3. The third duration is duration that is included in COT and that is determined by the first UE. After determining the COT, the first UE may allocate a resource to one or more UEs, and the second UE is, for example, any UE to which the first UE has allocated a resource. For example, the second UE in this embodiment of this application is any UE included in the second UE in the embodiment shown in FIG. 3, or the second UE in this embodiment of this application may not be included in the second UE in the embodiment shown in FIG. 3.

Optionally, the resource allocated by the first UE to the second UE may be located after a resource that is in the COT and that has been used. For example, the COT includes a total of 10 time domain units. When the first UE sends the sharing information to the second UE, transmission has been performed in first two time domain units in the 10 time domain units, and transmission is being performed in a 3rd time domain unit. In this case, the resource that is indicated by the sharing information and that is allocated to the second UE may be located after the first two time domain units. For example, the resource allocated to the second UE is a 6th time domain unit in the COT.

A quantity of bits occupied by the sharing information is, for example, a first quantity. The first quantity may be determined based on maximum duration of the COT, or may be determined based on the third duration. Separate descriptions are provided below. For example, both the first UE and the second UE may determine, in the following manners, the quantity of bits occupied by the sharing information. A manner used by the first UE may be the same as that used by the second UE. A specific manner below that is to be used may be predefined in a protocol, may be configured by the first UE or the second UE and notified to a peer end, or may be preconfigured in the UE. For descriptions of the maximum duration of the COT, refer to the embodiment shown in FIG. 3.

First, the first quantity is determined based on the maximum duration of the COT. This determining manner may further include a plurality of different determining manners.

1. Determining manner 1:

If the resource that is indicated by the sharing information and that is allocated to the second UE is one resource in first duration (or the third duration), the first quantity may satisfy the following relationship:

$$\text{D} = \left\lceil \log_2\left(\text{T}^{\mu}_{\text{COT,max}} - C1\right)\right\rceil \qquad \text{(formula 1)}$$

Alternatively, if the resource that is indicated by the sharing information and that is allocated to the second UE is two resources in first duration (or the third duration), or is at least three consecutive resources in first duration (or the third duration), the first quantity may satisfy the following relationship:

$$\text{D} = \left\lceil \log_2\left[\left(T^{\mu}_{COT,max} - C1\right) \times \left(T^{\mu}_{COT,max} - C2\right)/2\right]\right\rceil \qquad \text{(formula 2)}$$

In this embodiment of this application, if the sharing information indicates two resources in the first duration, the two resources may be two consecutive resources, or may be two non-consecutive resources. This is not limited, and details are not described in similar parts below.

In the foregoing formula, D represents the first quantity, $T^{\mu}_{COT,max}$ represents the maximum duration of the COT, both C1 and C2 are integers greater than or equal to 0, and $\lceil x \rceil$ represents a ceiling operation on x. For example, C1 and C2 may be predefined in a protocol, or may be preconfigured in the UE. Optionally, in this embodiment of this application, units of $T_{COT,max}^{\mu}$ , C1, and C2 may all be a slot.

In the determining manner 1, the first quantity is not directly calculated based on the maximum duration of the COT, but is calculated by subtracting a corresponding coefficient from the maximum duration of the COT. Therefore, the first quantity can be decreased, to reduce transmission overheads of the sharing information.

2. Determining manner 2: In the determining manner 2, that the first quantity is determined based on the maximum duration of the COT may include: The first quantity may be determined based on the maximum duration of the COT and a minimum time interval between a resource occupied by the first UE and a resource occupied by another UE that are in the COT.

If the resource that is indicated by the sharing information and that is allocated to the second UE is one resource in first duration (or the third duration), the first quantity may satisfy the following relationship:

$$D = \left\lceil \log_2 \left( T_{COT,max}^{\mu} - T_{gap}^{\mu} - 1 \right) \right\rceil \qquad \text{(formula 3)}$$

Alternatively, if the resource that is indicated by the sharing information and that is allocated to the second UE is two resources in first duration (or the third duration), or is at least three consecutive resources in first duration (or the third duration), the first quantity may satisfy the following relationship:

$$D = \left\lceil \log_2 \left[ \left( T_{COT,max}^{\mu} - T_{gap}^{\mu} - 1 \right) \times \left( T_{COT,max}^{\mu} - T_{gap}^{\mu} \right) / 2 \right] \right\rceil \qquad \text{(formula 4)}$$

In the foregoing formula, $T_{COT,max}^{\mu}$ represents the maximum duration of the COT, $T_{gap}^{\mu}$ represents the minimum time interval between the resource occupied by the first UE and the resource occupied by the another UE that are in the COT. For example, $T_{gap}^{\mu}$ is an interval preconfigured in the UE or predefined in a protocol, $T_{gap}^{\mu} = T_{proc,0}^{SL} + T_{proc,1}^{SL}$, $T_{gap}^{\mu} = T_{proc,0}^{SL}$, or $T_{gap}^{\mu} = T_{proc,1}^{SL}$ . In this embodiment of this application, a unit of $T_{gap}^{\mu}$ is, for example, a slot. Optionally, $T_{COT,max}^{\mu} > T_{gap}^{\mu} + 1$ . $T_{proc,0}^{SL}$ is, for example, the data processing delay of the another UE in the embodiment shown in FIG. 3. Refer to FIG. 1. $T_{proc,0}^{SL}$ may be duration between an end moment of a sensing window and a moment n in FIG. 1, and $T_{proc,1}^{SL}$ may be duration between the moment n and a start moment of a resource selection window in FIG. 1. $T_{proc,0}^{SL}$ and $T_{proc,1}^{SL}$ may be equal or not equal. Because the another UE (for example, the second UE) may use a resource that is in the COT and that is allocated by the first UE, the second UE may not need to autonomously select the resource. In this case, $T_{gap}^{\mu}$ may be the interval preconfigured in the UE or predefined in the protocol, or $T_{gap}^{\mu} = T_{proc,0}^{SL}$ . Alternatively, if the second UE needs to autonomously select a resource, $T_{gap}^{\mu}$ may be the interval preconfigured in the UE or predefined in the protocol, or $T_{gap}^{\mu} = T_{proc,0}^{SL} + T_{proc,1}^{SL}$ .

For example, Table 1 enumerates a value of $T_{proc,0}^{SL} + T_{proc,1}^{SL}$ when a subcarrier spacing is $15 \times 2^{\mu}$ (kHz). In Table 1, an example in which a data priority is a CAPC is used, and a unit of the value of $T_{proc,0}^{SL} + T_{proc,1}^{SL}$ in Table 1 is the slot.

Table 1

| CAPC\$\mu$ | 0 | 1 | 2 |
|---|---|---|---|
| 1 | \ | 6 | 11 |
| 2 | 4 | 6 | 11 |

(continued)

| CAPC\$\mu$ | 0 | 1 | 2 |
|---|---|---|---|
| 3 | 4 | 6 | 11 |

According to Table 1, when $\mu$ = 0 (in other words, the subcarrier spacing is 15 kHz) and the CAPC is 2, $T_{proc,0}^{SL} + T_{proc,1}^{SL} = 4$ ; or when $\mu$ = 1 (in other words, the subcarrier spacing is 30 kHz) and the CAPC is 1, $T_{proc,0}^{SL} + T_{proc,1}^{SL} = 6$.

Table 2 enumerates a value of $T_{proc,0}^{SL}$ when the subcarrier spacing is $15 \times 2^{\mu}$ (kHz). In Table 2, the example in which the data priority is the CAPC is used, and a unit of the value of $T_{proc,0}^{SL}$ in Table 2 is the slot.

Table 2

| CAPC\$\mu$ | 0 | 1 | 2 |
|---|---|---|---|
| 1 | \ | 1 | 2 |
| 2 | 1 | 1 | 2 |
| 3 | 1 | 1 | 2 |

In the COT, duration of $T_{gap}^{\mu}$ is not shared with the another UE. Therefore, the duration of $T_{gap}^{\mu}$ may not need to be considered for the quantity of bits occupied by the sharing information, so that transmission overheads of the sharing information can be reduced.

3. Determining manner 3: In the determining manner 3, that the first quantity is determined based on the maximum duration of the COT may include: The first quantity may be determined based on the maximum duration of the COT and data transmission duration of the first UE in the COT. For descriptions of the data transmission duration of the first UE in the COT, refer to the embodiment shown in FIG. 3.

If the resource that is indicated by the sharing information and that is allocated to the second UE is one resource in first duration (or the third duration), the first quantity may satisfy the following relationship:

$$\mathrm{D} = \left\lceil \log_2\left(T_{COT,max}^{\mu} - T_{demand}^{\mu}\right) \right\rceil \qquad \text{(formula 5)}$$

Alternatively, if the resource that is indicated by the sharing information and that is allocated to the second UE is two resources in first duration (or the third duration), or is at least three consecutive resources in first duration (or the third duration), the first quantity may satisfy the following relationship:

$$\mathrm{D} = \left\lceil \log_2\left[\left(T_{COT,max}^{\mu} - T_{demand}^{\mu}\right) \times \left(T_{COT,max}^{\mu} - T_{demand}^{\mu} + 1\right)/2\right] \right\rceil \qquad \text{(formula 6)}$$

In the foregoing formula, $T_{COT,max}^{\mu}$ represents the maximum duration of the COT, and $T_{demand}^{\mu}$ represents the data transmission duration of the first UE in the COT. In this embodiment of this application, $T_{demand}^{\mu}$ is, for example, a slot.

The data transmission duration of the first UE in the COT is not shared with the another UE. Therefore, duration of $T_{demand}^{\mu}$ may not need to be considered for the quantity of bits occupied by the sharing information, so that transmission overheads of the sharing information can be reduced.

Second, the first quantity is determined based on the third duration. This determining manner may also include a plurality of different determining manners.

1. Determining manner a: In the determining manner a, that the first quantity is determined based on the third duration may include: The first quantity may be determined based on the third duration and a minimum time interval between a resource occupied by the first UE and a resource occupied by another UE that are in the COT.

If the resource that is indicated by the sharing information and that is allocated to the second UE is one resource in first duration (or the third duration), the first quantity may satisfy the following relationship:

$$D = \left\lceil \log_2\left(T_{COT} - T_{gap}^\mu - 1\right)\right\rceil \qquad \text{(formula 7)}$$

Alternatively, if the resource that is indicated by the sharing information and that is allocated to the second UE is two resources in first duration (or the third duration), or is at least three consecutive resources in first duration (or the third duration), the first quantity may satisfy the following relationship:

$$D = \left\lceil \log_2\left[\left(T_{COT} - T_{gap}^\mu - 1\right) \times \left(T_{COT} - T_{gap}^\mu\right)/2\right]\right\rceil \qquad \text{(formula 8)}$$

In the foregoing formula, $T_{COT}$ represents the third duration. In this embodiment of this application, a unit of $T_{COT}$ is, for example, a slot. $T_{gap}^\mu$ represents the minimum time interval between the resource occupied by the first UE and the resource occupied by the another UE that are in the COT. For more descriptions of $T_{gap}^\mu$, refer to the foregoing descriptions.

A resource in the third duration is shared with the another UE. Therefore, the third duration instead of the maximum duration of the COT may be considered for the quantity of bits occupied by the sharing information. The third duration may be less than or equal to the maximum duration of the COT. Therefore, transmission overheads of the sharing information can be reduced. In addition, in the COT, duration of $T_{gap}^\mu$ is not shared with the another UE. Therefore, the duration of $T_{gap}^\mu$ may not need to be considered for the quantity of bits occupied by the sharing information, so that the transmission overheads of the sharing information can be further reduced.

2. Determining manner b: In the determining manner b, that the first quantity is determined based on the third duration may include: The first quantity may be determined based on the third duration and data transmission duration of the first UE in the COT.

If the resource that is indicated by the sharing information and that is allocated to the second UE is one resource in first duration (or the third duration), the first quantity may satisfy the following relationship:

$$D = \left\lceil \log_2\left(T_{COT} - T_{demand}^\mu\right)\right\rceil \qquad \text{(formula 9)}$$

Alternatively, if the resource that is indicated by the sharing information and that is allocated to the second UE is two resources in first duration (or the third duration), or is at least three consecutive resources in first duration (or the third duration), the first quantity may satisfy the following relationship:

$$D = \left\lceil \log_2\left[\left(T_{COT} - T_{demand}^\mu\right) \times \left(T_{COT} - T_{demand}^\mu + 1\right)/2\right]\right\rceil \qquad \text{(formula 10)}$$

In the foregoing formula, $T_{COT}$ represents the third duration, and $T_{demand}^\mu$ represents the data transmission duration of the first UE in the COT.

A resource in the third duration is shared with another UE. Therefore, the third duration instead of the maximum duration of the COT may be considered for the quantity of bits occupied by the sharing information. The third duration may be less than or equal to the maximum duration of the COT. Therefore, transmission overheads of the sharing information can be reduced. In addition, the data transmission duration of the first UE in the COT is not shared with the another UE. Therefore, duration of $T_{demand}^\mu$ may not need to be considered for the quantity of bits occupied by the sharing information, so that the transmission overheads of the sharing information can be further reduced.

For ease of understanding, using the foregoing determining manner 2 as an example, the determining manner 2 is described by using some examples. In the following examples, an example in which $T_{gap}^\mu = T_{proc,0}^{SL}$ is used, in other words, refer to Table 2. The following example (1) to example (12) correspond to a case in which the resource that is indicated by the sharing information and that is allocated to the second UE is one resource in the first duration (or the third duration), in other words, the formula 3 is used. The following example (13) to example (24) correspond to a case in which the resource that is indicated by the sharing information and that is allocated to the second UE is two resources in the first duration (or the third duration), or correspond to a case in which the resource that is indicated by the sharing information and that is allocated to the second UE is at least three consecutive resources in the first duration (or the third duration), in other words, the formula 4 is used.

(1) If the CAPC = 1, the maximum duration of the COT is 2 ms. If the subcarrier spacing is 15 kHz, the maximum duration of the COT is two slots. In this case, the resource in the COT cannot be shared with the another UE (because the resource cannot meet $T_{proc,0}^{SL}$ of the another UE). Therefore, in this case, the first UE may not send the sharing information. This is alternatively understood as: The quantity of bits occupied by the sharing information is 0.

(2) If the CAPC = 2, the maximum duration of the COT is 4 ms. If the subcarrier spacing is 15 kHz, the maximum duration of the COT is four slots. If the technical solution in this embodiment of this application is not applied, the quantity of bits occupied by the sharing information is $\lceil \log_2 4 \rceil = 2$. If the determining manner 1 in this embodiment of this application is applied, the quantity of bits occupied by the sharing information is $\lceil \log_2(4 - 1 - 1) \rceil = 1$.

(3) The CAPC = 3 or 4, and the maximum duration of the COT is 6 ms. If the subcarrier spacing is 15 kHz, the maximum duration of the COT is six slots. If the technical solution in this embodiment of this application is not applied, the quantity of bits occupied by the sharing information is $\lceil \log_2 6 \rceil = 3$. If the determining manner 1 in this embodiment of this application is applied, the quantity of bits occupied by the sharing information is $\lceil \log_2(6 - 1 - 1) \rceil = 2$.

(4) The CAPC = 3 or 4, and the maximum duration of the COT is 10 ms. If the subcarrier spacing is 15 kHz, the maximum duration of the COT is 10 slots. If the technical solution in this embodiment of this application is not applied, the quantity of bits occupied by the sharing information is $\lceil \log_2 10 \rceil = 4$. If the determining manner 1 in this embodiment of this application is applied, the quantity of bits occupied by the sharing information is $\lceil \log_2(10 - 1 - 1) \rceil = 3$.

(5) If the CAPC = 1, the maximum duration of the COT is 2 ms. If the subcarrier spacing is 30 kHz, the maximum duration of the COT is four slots. If the technical solution in this embodiment of this application is not applied, the quantity of bits occupied by the sharing information is $\lceil \log_2 4 \rceil = 2$. If the determining manner 1 in this embodiment of this application is applied, the quantity of bits occupied by the sharing information is $\lceil \log_2(4 - 1 - 1) \rceil = 1$.

(6) If the CAPC = 2, the maximum duration of the COT is 4 ms. If the subcarrier spacing is 30 kHz, the maximum duration of the COT is eight slots. If the technical solution in this embodiment of this application is not applied, the quantity of bits occupied by the sharing information is $\lceil \log_2 8 \rceil = 3$. If the determining manner 1 in this embodiment of this application is applied, the quantity of bits occupied by the sharing information is $\lceil \log_2(8 - 1 - 1) \rceil = 3$.

(7) The CAPC = 3 or 4, and the maximum duration of the COT is 6 ms. If the subcarrier spacing is 30 kHz, the maximum duration of the COT is 12 slots. If the technical solution in this embodiment of this application is not applied, the quantity of bits occupied by the sharing information is $\lceil \log_2 12 \rceil = 4$. If the determining manner 1 in this embodiment of this application is applied, the quantity of bits occupied by the sharing information is $\lceil \log_2(12 - 1 - 1) \rceil = 4$.

(8) The CAPC = 3 or 4, and the maximum duration of the COT is 10 ms. If the subcarrier spacing is 30 kHz, the maximum duration of the COT is 20 slots. If the technical solution in this embodiment of this application is not applied, the quantity of bits occupied by the sharing information is $\lceil \log_2 20 \rceil = 5$. If the determining manner 1 in this embodiment of this application is applied, the quantity of bits occupied by the sharing information is $\lceil \log_2(20 - 1 - 1) \rceil = 5$.

(9) If the CAPC = 1, the maximum duration of the COT is 2 ms. If the subcarrier spacing is 60 kHz, the maximum duration of the COT is eight slots. If the technical solution in this embodiment of this application is not applied, the quantity of bits occupied by the sharing information is $\lceil \log_2 8 \rceil = 3$. If the determining manner 1 in this embodiment of this application is applied, the quantity of bits occupied by the sharing information is $\lceil \log_2(8 - 2 - 1) \rceil = 3$.

(10) If the CAPC = 2, the maximum duration of the COT is 4 ms. If the subcarrier spacing is 60 kHz, the maximum duration of the COT is 16 slots. If the technical solution in this embodiment of this application is not applied, the quantity of bits occupied by the sharing information is $\lceil \log_2 16 \rceil = 4$. If the determining manner 1 in this embodiment of this application is applied, the quantity of bits occupied by the sharing information is $\lceil \log_2 (16 - 2 - 1) \rceil = 4$.

(11) The CAPC = 3 or 4, and the maximum duration of the COT is 6 ms. If the subcarrier spacing is 60 kHz, the maximum duration of the COT is 24 slots. If the technical solution in this embodiment of this application is not applied, the quantity of bits occupied by the sharing information is $\lceil \log_2 24 \rceil = 5$. If the determining manner 1 in this embodiment of this application is applied, the quantity of bits occupied by the sharing information is $\lceil \log_2 (24 - 2 - 1) \rceil = 5$.

(12) The CAPC = 3 or 4, and the maximum duration of the COT is 10 ms. If the subcarrier spacing is 60 kHz, the maximum duration of the COT is 40 slots. If the technical solution in this embodiment of this application is not applied, the quantity of bits occupied by the sharing information is $\lceil \log_2 40 \rceil = 6$. If the determining manner 1 in this embodiment of this application is applied, the quantity of bits occupied by the sharing information is $\lceil \log_2 (40 - 2 - 1) \rceil = 6$.

(13) If the CAPC = 1, the maximum duration of the COT is 2 ms. If the subcarrier spacing is 15 kHz, the maximum duration of the COT is two slots. In this case, the resource in the COT cannot be shared with the another UE (because the resource cannot meet $T_{proc,0}^{SL}$ of the another UE). Therefore, in this case, the first UE may not send the sharing information. This is alternatively understood as: The quantity of bits occupied by the sharing information is 0.

(14) If the CAPC = 2, the maximum duration of the COT is 4 ms. If the subcarrier spacing is 15 kHz, the maximum duration of the COT is four slots. If the technical solution in this embodiment of this application is not applied, the quantity of bits occupied by the sharing information is 4. If the determining manner 1 in this embodiment of this application is applied, the quantity of bits occupied by the sharing information is $\lceil \log_2 (4 - 1 - 1) \times (4 - 1)/2 \rceil = 2$.

(15) The CAPC = 3 or 4, and the maximum duration of the COT is 6 ms. If the subcarrier spacing is 15 kHz, the maximum duration of the COT is six slots. If the technical solution in this embodiment of this application is not applied, the quantity of bits occupied by the sharing information is 5. If the determining manner 1 in this embodiment of this application is applied, the quantity of bits occupied by the sharing information is $\lceil \log_2 (6 - 1 - 1) \times (6 - 1)/ 2 \rceil = 4$.

(16) The CAPC = 3 or 4, and the maximum duration of the COT is 10 ms. If the subcarrier spacing is 15 kHz, the maximum duration of the COT is 10 slots. If the technical solution in this embodiment of this application is not applied, the quantity of bits occupied by the sharing information is 6. If the determining manner 1 in this embodiment of this application is applied, the quantity of bits occupied by the sharing information is $\lceil \log_2 (10 - 1 - 1) \times (10 - 1)/2 \rceil = 6$.

(17) If the CAPC = 1, the maximum duration of the COT is 2 ms. If the subcarrier spacing is 30 kHz, the maximum duration of the COT is four slots. If the technical solution in this embodiment of this application is not applied, the quantity of bits occupied by the sharing information is 4. If the determining manner 1 in this embodiment of this application is applied, the quantity of bits occupied by the sharing information is $\lceil \log_2 (4 - 1 - 1) \times (4 - 1)/2 \rceil = 2$.

(18) If the CAPC = 2, the maximum duration of the COT is 4 ms. If the subcarrier spacing is 30 kHz, the maximum duration of the COT is eight slots. If the technical solution in this embodiment of this application is not applied, the quantity of bits occupied by the sharing information is 6. If the determining manner 1 in this embodiment of this application is applied, the quantity of bits occupied by the sharing information is $\lceil \log_2 (8 - 1 - 1) \times (8 - 1)/2 \rceil = 5$.

(19) The CAPC = 3 or 4, and the maximum duration of the COT is 6 ms. If the subcarrier spacing is 30 kHz, the maximum duration of the COT is 12 slots. If the technical solution in this embodiment of this application is not applied, the quantity of bits occupied by the sharing information is 7. If the determining manner 1 in this embodiment of this application is applied, the quantity of bits occupied by the sharing information is $\lceil \log_2 (12 - 1 - 1) \times (12 - 1)/2 \rceil = 6$.

(20) The CAPC = 3 or 4, and the maximum duration of the COT is 10 ms. If the subcarrier spacing is 30 kHz, the maximum duration of the COT is 20 slots. If the technical solution in this embodiment of this application is not applied, the quantity of bits occupied by the sharing information is 8. If the determining manner 1 in this embodiment of this application is applied, the quantity of bits occupied by the sharing information is

$$\lceil \log_2(20-1-1) \times (20-1)/2 \rceil = 8.$$

(21) If the CAPC = 1, the maximum duration of the COT is 2 ms. If the subcarrier spacing is 60 kHz, the maximum duration of the COT is eight slots. If the technical solution in this embodiment of this application is not applied, the quantity of bits occupied by the sharing information is 6. If the determining manner 1 in this embodiment of this application is applied, the quantity of bits occupied by the sharing information is

$$\lceil \log_2(8-2-1) \times (8-2)/2 \rceil = 4.$$

(22) If the CAPC = 2, the maximum duration of the COT is 4 ms. If the subcarrier spacing is 60 kHz, the maximum duration of the COT is 16 slots. If the technical solution in this embodiment of this application is not applied, the quantity of bits occupied by the sharing information is 8. If the determining manner 1 in this embodiment of this application is applied, the quantity of bits occupied by the sharing information is $\lceil \log_2(16-2-1) \times (16-2)/2 \rceil = 7$.

(23) The CAPC = 3 or 4, and the maximum duration of the COT is 6 ms. If the subcarrier spacing is 60 kHz, the maximum duration of the COT is 24 slots. If the technical solution in this embodiment of this application is not applied, the quantity of bits occupied by the sharing information is 9. If the determining manner 1 in this embodiment of this application is applied, the quantity of bits occupied by the sharing information is

$$\lceil \log_2(24-2-1) \times (24-2)/2 \rceil = 9.$$

(24) The CAPC = 3 or 4, and the maximum duration of the COT is 10 ms. If the subcarrier spacing is 60 kHz, the maximum duration of the COT is 40 slots. If the technical solution in this embodiment of this application is not applied, the quantity of bits occupied by the sharing information is 10. If the determining manner 1 in this embodiment of this application is applied, the quantity of bits occupied by the sharing information is

$$\lceil \log_2(40-2-1) \times (40-2)/2 \rceil = 10.$$

It can be learned that, because the duration of $T_{gap}^{\mu}$ may not need to be considered when the quantity of bits occupied by the sharing information is determined, the transmission overheads of the sharing information can be reduced in many scenarios.

The embodiment shown in FIG. 6 and the embodiment shown in FIG. 3 may be applied in combination. For example, the quantity of bits occupied by the sharing information sent by the first UE in the embodiment shown in FIG. 3 may be determined by using the embodiment shown in FIG. 6. Alternatively, the embodiment shown in FIG. 6 and the embodiment shown in FIG. 3 may not be combined, but are separately applied.

As described above, a UE (for example, the second UE) may send a reservation message to reserve a resource. The reservation message may indicate a priority of SL data currently sent by the second UE. A UE (for example, the first UE) that receives the reservation message may preempt COT, to allocate a resource in the COT to the second UE. In this case, a data priority corresponding to the COT may be the priority of the SL data currently sent by the second UE. The second UE uses, as a reserved resource, the resource allocated by the first UE. In this case, SL data that the second UE expects to send on the resource and the SL data that is sent when the second UE sends the reservation message may belong to different transport blocks, and priorities of different transport blocks may be the same or different. Consequently, the data priority corresponding to the COT is the same as or different from a priority of the SL data that the second UE expects to send on the reserved resource. If the data priority corresponding to the COT is higher than the priority of the SL data that the second UE expects to send on the reserved resource, the SL data cannot be sent, in other words, the second UE cannot occupy the allocated resource. In this case, the resource may be preempted by another UE, for example, a third UE. In the COT, a resource that is after the resource in time domain may have been allocated to another UE, for example, a fourth UE, but the resource is preempted by the third UE. Consequently, a conflict may occur between transmission performed by the fourth UE and transmission performed by the third UE.

In view of this, an embodiment of this application provides a third resource allocation method, to reduce a conflict probability by using the method. FIG. 7A is a flowchart of the method.

S701: A first UE sends sharing information to a second UE. Correspondingly, the second UE receives the sharing information from the first UE. After determining COT, the first UE may allocate a resource to one or more UEs, and the second UE is, for example, any UE to which the first UE has allocated a resource.

The COT is COT preempted by the first UE, and the first UE may allocate a resource in the COT to another UE. For example, the embodiment shown in FIG. 7A and the embodiment shown in FIG. 3 may be applied in combination, and the first UE may allocate the resource in the COT to the another UE by using the method provided in the embodiment shown in FIG. 3. Alternatively, the embodiment shown in FIG. 7A and the embodiment shown in FIG. 3 may not be combined, and the first UE may allocate the resource in the COT to the another UE by using a method other than the embodiment shown in FIG. 3. In addition, for example, the embodiment shown in FIG. 7A and the embodiment shown in FIG. 3 may be applied in combination, and the quantity of bits occupied by the sharing information may be determined by using the embodiment shown in FIG. 7A. Alternatively, the embodiment shown in FIG. 7A and the embodiment shown in FIG. 3 may not be combined, and the quantity of bits occupied by the sharing information may be determined by using a method other than the embodiment shown in FIG. 7A.

The sharing information may indicate the resource that is in the COT and that is allocated to the second UE. Optionally, the sharing information may further indicate third duration. For example, the third duration includes duration occupied by the first UE in the COT (namely, data transmission duration of the first UE in the COT) and total duration that is in the COT and that is allocated to the another UE. For descriptions of the third duration, refer to the embodiment shown in FIG. 3.

Optionally, before S701, the second UE may send a reservation message. Correspondingly, the first UE may receive the reservation message from the second UE. The reservation message may indicate a resource reserved by the second UE, and may further indicate a priority of SL data currently sent by the second UE. For example, the first UE may determine the COT based on the reservation message, for example, determine the COT based on the data priority indicated by the reservation message, and allocate the resource in the COT to the second UE based on the resource requested to be reserved by using the reservation message.

S702: If a data priority corresponding to the COT is higher than a priority of a first transport block, the second UE sends a first data packet on the resource allocated to the second UE. The first data packet is an SL data packet, and a receiving end of the first data packet may be the first UE, or may be another UE. An example in which the receiving end of the first data packet is a third UE is used in FIG. 7A. The resource allocated to the second UE is, for example, referred to as a resource 1. The first transport block is, for example, a transport block that the second UE expects to send, in other words, the resource reserved by the second UE by using the reservation message is for sending the first transport block.

The first data packet is a null packet, in other words, the first data packet does not include any data. This may be understood as: If the data priority corresponding to the COT is higher than the priority of the first transport block, the second UE cannot send the first transport block on the resource 1, in other words, the second UE cannot occupy the resource 1. In this case, the resource 1 may be preempted by another UE. If another resource after the resource 1 in the COT has been allocated to a corresponding UE, a conflict may occur between transmission performed by the UE to which the resource is allocated and transmission performed by the UE that preempts the resource. Therefore, in this embodiment of this application, the second UE may send the null packet. This is equivalent to: The second UE may occupy the resource 1 by using the null packet, so that the resource 1 is not preempted by another UE, to reduce a conflict probability and improve an SL data transmission success rate.

Optionally, if the data priority corresponding to the COT is higher than the priority of the first transport block, but a transport block to be sent by the second UE further includes a transport block (for example, a second transport block) whose data priority is higher than or equal to the priority corresponding to the COT, S702 may be replaced with: The second UE sends a second data packet on the resource 1, where the second data packet may include SL data corresponding to the second transport block. Alternatively, S702 does not need to be replaced if the data priority corresponding to the COT is higher than the priority of the first transport block and the transport block to be sent by the second UE does not include a transport block whose data priority is higher than or equal to the priority corresponding to the COT. The transport block to be sent by the second UE may include the first transport block. In other words, when the first transport block cannot be sent, the second UE may send the null packet if the second UE has no other to-be-sent transport blocks or priorities of other transport blocks to be sent by the second UE are all lower than the priority corresponding to the COT. If the second UE still has the to-be-sent second transport block, and the priority of the second transport block is higher than or equal to the priority corresponding to the COT, the second UE may not send the null packet, but send the second transport block, so that the resource 1 is not occupied by another UE, and a transmission delay of the second UE can be reduced.

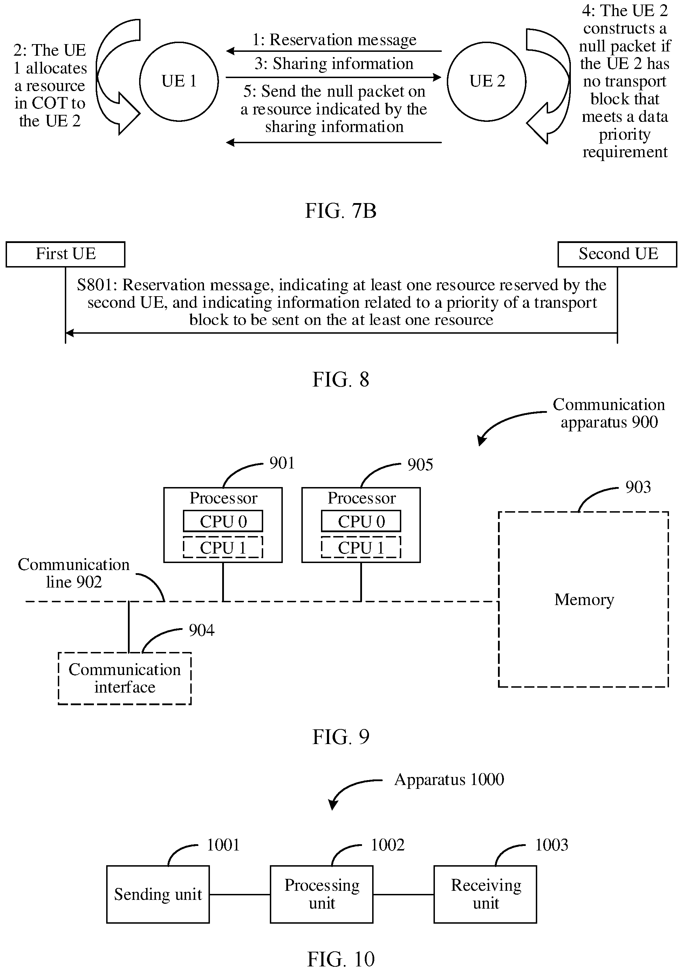

FIG. 7B is a diagram of the method according to this embodiment of this application. For example, a UE 1 is the first UE, and a UE 2 is the second UE. In step 1, the UE 2 may send a reservation message, and the UE 1 receives the reservation message. The reservation message may indicate a resource reserved by the UE 2. In step 2, the UE 1 may allocate a resource in the COT to the UE 2. Optionally, the UE 1 may allocate the resource in the COT to the UE 2 based on the resource reserved by the UE 2. In step 3, the UE 1 sends sharing information to the UE 2, to indicate the resource allocated to the UE 2. In step 4, the UE 2 may construct a null packet if the UE 2 determines that the UE 2 has no transport block that meets a data priority requirement. In step 5, the UE 2 performs SL transmission, for example, sends the null packet. A receiving end of the null packet may be a receiving end of the first transport block. An example in which the receiving end is the UE 1 is used FIG. 7B. An actual case is not limited thereto. That the UE 2 has no transport block that meets a data priority requirement in step 4 may include: The data priority corresponding to the COT is higher than the priority of the first transport block, and a transport block to be sent by the second UE does not include a transport block whose data priority is higher than or equal to the priority corresponding to the COT.

Optionally, the resource 1 may not include last one or more time domain units in the COT. It can be learned from the embodiment shown in FIG. 3 that, a remaining resource in the COT except a resource occupied by the first UE may be completely allocated to the another UE; or only a part of a remaining resource may be allocated to the another UE, and the other part of the remaining resource is not allocated, and is idle. The unallocated resource includes, for example, the last one or more time domain units in the COT. In this case, if the resource 1 includes the last one or more time domain units in the COT, it indicates that a resource after the resource 1 in the COT may not be allocated to the another UE. In this case, even if the resource after the resource 1 is preempted by the another UE, transmission performed by a UE in the COT is not affected. Therefore, if the resource 1 includes the last one or more time domain units in the COT, the second UE may not perform S702. In other words, if the data priority corresponding to the COT is higher than the priority of the first transport block, the second UE does not occupy the resource 1. Alternatively, if the resource 1 includes the last one or more time domain units in the COT, the second UE may send the second transport block if the second UE still has the to-be-sent second transport block and the priority of the second transport block is higher than or equal to the priority corresponding to the COT; or the second UE may not need to send information on the resource 1 if the second UE has no other to-be-sent transport blocks or priorities of other transport blocks to be sent by the second UE are all lower than the priority corresponding to the COT, to reduce power consumption.

Alternatively, if the resource 1 does not include the last one or more time domain units in the COT, a resource after the resource 1 in the COT may be allocated to the another UE. In this case, the second UE may perform S702. Alternatively, in this case, the second UE may send the second transport block if the second UE still has the to-be-sent second transport block and the priority of the second transport block is higher than or equal to the priority corresponding to the COT; or the second UE may send a null packet if the second UE has no other to-be-sent transport blocks or priorities of other transport blocks to-be sent by the second UE are all lower than the priority corresponding to the COT.

Transmission overheads of the second UE can be reduced through determining on a time domain unit included in the resource 1.

Optionally, although the first data packet does not include any data, the first data packet still includes a payload (payload) field. For example, the payload may include a random number or preset information. The preset information is, for example, all "0" or all "1". For another example, the payload may include a reference signal, for example, a channel state information-reference signal (channel state information-reference signal, CSI-RS), and a UE that receives the reference signal may perform measurement, so that channel quality may be optimized by using the resource 1, to improve resource utilization.

Optionally, the second UE may further send sidelink control information, for example, SCI. If the second UE sends the first data packet, the SCI may include first indication information, and the first indication information may indicate that the first data packet is a null packet, or indicate that the first data packet does not include data. Therefore, a UE (for example, the third UE) that receives the SCI may determine, based on the first indication information, that the first data packet is a null packet, and may not need to perform decoding or the like on the first data packet, to reduce power consumption of processing the first data packet by the third UE. In addition, the SCI may be further for scheduling the first data packet. For example, the SCI includes an identifier of the third UE and/or the priority of the first transport block, and the priority of the first transport block is, for example, a priority or a CAPC of the first transport block.

In this embodiment of this application, the second UE may send the null packet. This is equivalent to: The second UE may occupy the resource by using the null packet, so that the resource allocated to the second UE is not preempted by another UE, to reduce a conflict probability and improve an SL data transmission success rate.

Next, an embodiment of this application provides a communication method, to improve, by using the method, a probability that a data priority of COT matches a priority of SL data to be sent by a UE. FIG. 8 is a flowchart of the method.

S801: A second UE sends a reservation message. Correspondingly, a first UE may receive the reservation message from the second UE. The reservation message is, for example, SCI, or may be another message. The second UE is, for example, any UE that sends a reservation message to the first UE. Subsequently, the first UE may allocate a resource in the COT to the second UE, or the first UE may not allocate a resource in the COT to the second UE (for example, when a remaining resource in the COT is insufficient or a remaining resource in the COT is completely allocated).

The reservation message may indicate at least one resource reserved by the second UE. In addition, the reservation message may further indicate (or include) information related to a priority of a transport block to be sent on the at least one resource. In an optional indication manner in which the reservation message indicates the information related to the priority of the transport block to be sent on the at least one resource, the reservation message may indicate a priority of a transport block to be sent on each of the at least one resource, where transport blocks sent on different resources may be the same or different, and a quantity of priorities indicated by the reservation message may be less than or equal to a quantity of the at least one resource. In this indication manner, an indication is given for each resource, so that the first UE can learn of the priority more definitely.

For example, the reservation message may include at least one field, where the at least one field may carry the information related to the priority of the transport block to be sent on the at least one resource, and one field may carry information related to a priority of a transport block to be sent on one resource. For example, the information related to the priority is a value of the priority, for example, a value of a CAPC or a value of a priority. Using an example in which the information related to the priority is the value of the CAPC, there are currently four CAPC levels, and one field may occupy two bits (bits). If there are more or fewer CAPC levels through extension, a quantity of bits occupied by one field may also change accordingly. If a same priority is to be sent on different resources, fields corresponding to these different resources may carry same information related to the priority. For example, the at least one resource includes N resources, where N is an integer greater than or equal to 2. A 1st resource in the N resources is for performing initial transmission of a transport block 1, and remaining N-1 resources in the N resources are for performing retransmission of a transport block 2. In this case, N fields in the reservation message that correspond to the N resources may carry same information related to a priority.

Alternatively, in another optional indication manner, the reservation message may indicate a second priority, and the second priority is a priority of a transport block of a lowest priority in the transport block to be sent on the at least one resource. In this indication manner, the reservation message needs to indicate only one data priority, so that content indicated by the reservation message can be reduced. This helps reduce overheads of the reservation message. In addition, the first UE determines the COT based on the reservation message. Because the data priority indicated by the reservation message is low, the COT can meet requirements of more UEs.

For example, the reservation message is for reserving a resource 1, a resource 2, and a resource 3, the second UE expects to send a transport block 1 on the resource 1 and the resource 2 and send a transport block 2 on the resource 3, a priority of the transport block 1 is a CAPC 1, a priority of the transport block 2 is a CAPC 2, and the priority of the transport block 1 is higher than the priority of the transport block 2. In this case, the reservation message may indicate the priority of the transport block to be sent on each of the three resources. For example, the reservation message indicates that the priority of the transport block 1 to be sent on the resource 1 and the resource 2 is the CAPC 1, and indicates that the priority of the transport block 2 to be sent on the resource 3 is the CAPC 2. Alternatively, the reservation message may indicate a priority of a transport block of a lowest priority in the transport blocks to be sent on the three resources. For example, the reservation message indicates the CAPC 2 instead of the CAPC 1. Optionally, if the reservation message indicates the lowest priority, the reservation message may indicate a resource corresponding to the lowest priority, or may not indicate a resource corresponding to the lowest priority. Still using the foregoing example, the reservation message may indicate that the priority of the transport block 2 to be sent on the resource 3 is the CAPC 2; or the reservation message indicates the CAPC 2, but does not indicate that the CAPC 2 corresponds to the resource 3.

Optionally, the reservation message may further indicate a priority of a transport block (or SL data) currently sent by the second UE. The priority of the transport block currently sent by the second UE may be the same as a priority of a transport block to be sent on one or more of the at least one resource, or may be different from the priority of the transport block to be sent on the at least one resource. When determining the COT, the first UE may consider the priority of the transport block currently sent by the second UE and the priority of the transport block to be sent on the at least one resource. Alternatively, the first UE may consider only the priority of the transport block to be sent on the at least one resource, and does not consider the priority of the transport block currently sent by the second UE.

The first UE may perform a sensing (sensing) process, a resource selection process, and the like, to determine the COT. In the resource selection process, the first UE may compare reference signal received power (reference signal received power, RSRP) that is of a specific resource and that is obtained in the sensing process with an RSRP threshold, to determine whether the resource is selectable. As also described above, when determining the COT, the first UE may consider the priority of the transport block to be sent on the at least one resource. In this case, optionally, the first UE may perform resource selection by using an RSRP threshold corresponding to the priority of the transport block to be sent on the at least one resource. For example, the first UE may determine one priority from the priority of the transport block to be sent on the at least one resource, and perform resource selection based on an RSRP threshold corresponding to the priority. In this manner, the determined COT can meet a requirement of another UE (for example, the second UE).

In this embodiment of this application, the reservation message sent by the second UE may indicate the priority of the transport block to be sent on the reserved resource. The first UE may determine COT based on the priority. In this way, a probability that the data priority of the COT matches a priority of SL data to be sent by the second UE, a sending success rate of the second UE, and resource utilization in the COT can be improved.

FIG. 9 is a diagram of a structure of a communication apparatus according to an embodiment of this application. The communication apparatus 900 may be the first UE in the embodiment shown in any one of FIG. 3, FIG. 6, FIG. 7A, or FIG. 8 or a circuit system of the first UE, and is configured to implement the method corresponding to the first UE in the foregoing method embodiments. Alternatively, the communication apparatus 900 may be the second UE in the embodiment shown in any one of FIG. 3, FIG. 6, FIG. 7A, or FIG. 8 or a circuit system of the second UE, and is configured to implement the method corresponding to the second UE in the foregoing method embodiments. For specific functions, refer to descriptions in the foregoing method embodiments. For example, the circuit system is a chip system.

The communication apparatus 900 includes at least one processor 901. The processor 901 may be configured to perform internal processing of the apparatus, to implement a specific control processing function. Optionally, the processor 901 includes instructions. Optionally, the processor 901 may store data. Optionally, different processors may be independent components, may be located in different physical locations, and may be located on different integrated circuits. Optionally, different processors may be integrated into one or more processors, for example, integrated into one or more integrated circuits.

Optionally, the communication apparatus 900 includes one or more memories 903, configured to store instructions. Optionally, the memory 903 may further store data. The processor and the memory may be separately disposed, or may be integrated together.

Optionally, the communication apparatus 900 includes a communication line 902 and at least one communication interface 904. Because the memory 903, the communication line 902, and the communication interface 904 are all optional, the memory 903, the communication line 902, and the communication interface 904 are all represented by dashed lines in FIG. 9.

Optionally, the communication apparatus 900 may further include a transceiver and/or an antenna. The transceiver may be configured to: send information to another apparatus or receive information from another apparatus. The transceiver may be referred to as a transceiver machine, a transceiver circuit, an input/output interface, or the like, and is configured to implement a transceiver function of the communication apparatus 900 by using the antenna. Optionally, the transceiver includes a transmitter (transmitter) and a receiver (receiver). For example, the transmitter may be configured to generate a radio frequency (radio frequency) signal based on a baseband signal, and the receiver may be configured to convert a radio frequency signal into a baseband signal.

The processor 901 may include a general-purpose central processing unit (central processing unit, CPU), a microprocessor, an application-specific integrated circuit (application-specific integrated circuit, ASIC), or one or more integrated circuits configured to control program execution of the solutions in this application.

The communication line 902 may include a path for transmitting information between the foregoing components.

The communication interface 904 uses any transceiver-type apparatus, to communicate with another device or a communication network, for example, the Ethernet, a radio access network (radio access network, RAN), a wireless local area network (wireless local area network, WLAN), or a wired access network.

The memory 903 may be a read-only memory (read-only memory, ROM) or another type of static storage device that can store static information and instructions, or a random access memory (random access memory, RAM) or another type of dynamic storage device that can store information and instructions. Alternatively, the memory 903 may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can carry or store expected program code in an instruction or data structure form and that can be accessed by a computer. However, the memory 903 is not limited thereto. The memory 903 may exist independently, and is connected to the processor 901 through the communication line 902. Alternatively, the memory 903 may be integrated with the processor 901.

The memory 903 is configured to store computer-executable instructions for performing the solutions in this application, and the processor 901 controls the execution. The processor 901 is configured to execute the computer-executable instructions stored in the memory 903, to implement the communication method provided in the foregoing embodiments of this application.

Optionally, the computer-executable instructions in this embodiment of this application may also be referred to as application program code. This is not specifically limited in this embodiment of this application.

During specific implementation, in an embodiment, the processor 901 may include one or more CPUs, for example, a CPU 0 and a CPU 1 in FIG. 9.

During specific implementation, in an embodiment, the communication apparatus 900 may include a plurality of processors, for example, the processor 901 and a processor 905 in FIG. 9. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 9 is a chip, for example, a chip of the first UE or a chip of the second UE, the chip includes the processor 901 (where the chip may further include the processor 905), the communication line 902, and the communication interface 904, and optionally, may further include the memory 903. For example, the communication interface 904 may be an input interface, a pin, or a circuit. The memory 903 may be a register, a cache, or the like. The processor 901 and the processor 905 each may be a general-purpose CPU, a microprocessor, an ASIC, or one or more integrated circuits configured to control program execution of the method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, the division into modules is an example, and is merely a logical function division. During actual implementation, another division manner may be used. For example, when each functional module is obtained through division based on each corresponding function, FIG. 10 is a diagram of an apparatus. The apparatus 1000 may be the first UE or the second UE in the foregoing method embodiments, or may be a chip of the first UE or a chip of the second UE. The apparatus 1000 includes a sending unit 1001, a processing unit 1002, and a receiving unit 1003.

It should be understood that the apparatus 1000 may be configured to implement the steps performed by the first UE or the second UE in the methods in embodiments of this application. For related features, refer to the foregoing embodiments. Details are not described herein again.

Optionally, functions/implementation processes of the sending unit 1001, the receiving unit 1003, and the processing unit 1002 in FIG. 10 may be implemented by the processor 901 in FIG. 9 by invoking the computer-executable instructions stored in the memory 903. Alternatively, a function/an implementation process of the processing unit 1002 in FIG. 10 may be implemented by the processor 901 in FIG. 9 by invoking the computer-executable instructions stored in the memory 903, and functions/implementation processes of the sending unit 1001 and the receiving unit 1003 in FIG. 10 may be implemented by the communication interface 904 in FIG. 9.

Optionally, when the apparatus 1000 is a chip or a circuit, functions/implementation processes of the sending unit 1001 and the receiving unit 1003 may alternatively be implemented by a pin, a circuit, or the like.

This application further provides a computer-readable storage medium. The computer-readable storage medium stores a computer program or instructions. When the computer program or the instructions are run, the method performed by the first UE or the second UE in the foregoing method embodiments is implemented. In this way, the functions in the foregoing embodiments may be implemented in a form of a software functional unit and sold or used as an independent product. Based on such an understanding, the technical solutions of this application essentially, or the part contributing to prior art, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the first UE or the second UE in any one of the foregoing method embodiments.

An embodiment of this application further provides a processing apparatus, including a processor and an interface. The processor is configured to perform the method performed by the first UE or the second UE in any one of the foregoing method embodiments.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive, (solid-state drive, SSD)), or the like.

Various illustrative logic units and circuits described in embodiments of this application may implement or operate the described functions by using a general-purpose processor, a digital signal processor (digital signal processor, DSP), an application-specific integrated circuit (application-specific integrated circuit, ASIC), a field-programmable gate array (field-programmable gate array, FPGA) or another programmable logic apparatus, a discrete gate or transistor logic, a discrete hardware component, or a design of any combination thereof. The general-purpose processor may be a microprocessor. Optionally, the general-purpose processor may alternatively be any conventional processor, a controller, a microcontroller, or a state machine. The processor may alternatively be implemented by a combination of computing apparatuses, for example, a digital signal processor and a microprocessor, a plurality of microprocessors, one or more microprocessors with one digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to a processor, so that the processor may read information from the storage medium and write information to the storage medium. Optionally, the storage medium may be integrated into a processor. The processor and the storage medium may be disposed in an ASIC, and the ASIC may be disposed in a terminal device. Optionally, the processor and the storage medium may be disposed in different parts of a terminal device.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Although embodiments of this application are described with reference to specific features and embodiments thereof, it is clear that various modifications and combinations may be made to embodiments of this application without departing from the scope of embodiments of this application. Correspondingly, embodiments of this application and the accompanying drawings are merely example descriptions of embodiments of this application defined by the appended claims, and are considered to cover any or all modifications, variations, combinations, or equivalents in the scope of embodiments of this application.

It is clear that a person skilled in the art may make various modifications and variations to embodiments of this application without departing from the scope of embodiments of this application. In this way, embodiments of this application are also intended to cover these modifications and variations provided that they fall within the scope of the claims of embodiments of this application and equivalent technologies thereof.

**Claims**

1. A resource allocation method, applied to a first terminal device, wherein the method comprises:
   sending sharing information to a second terminal device, wherein a quantity of bits occupied by the sharing information is a first quantity, and the first quantity is determined based on maximum duration of channel occupancy time COT.

2. The method according to claim 1, wherein that the first quantity is determined based on maximum duration of COT comprises:

   when the sharing information indicates one resource in first duration, the first quantity satisfies the following relationship: $D = \left\lceil \log_2\left(T^{\mu}_{COT,max} - C1\right)\right\rceil$, wherein

   D represents the first quantity, $T^{\mu}_{COT,max}$ represents the maximum duration of the COT, $\mu$ represents a first subcarrier spacing, C1 is an integer greater than or equal to 0, $\lceil x \rceil$ represents a ceiling operation on x, and the first duration is duration that is in the COT and that is allocable to another terminal device.

3. The method according to claim 2, wherein the maximum duration of the COT is a maximum value that is of a quantity of slots occupied by the COT and that is determined based on the first subcarrier spacing.

4. The method according to claim 2 or 3, wherein

   $\mu$ = 0, the first subcarrier spacing is 15 kHz, C1 = 0, the maximum duration of the COT is 10 slots, and $D = \lceil \log_2 10 \rceil = 4$;

   $\mu$ = 1, the first subcarrier spacing is 30 kHz, C1 = 0, the maximum duration of the COT is 20 slots, and $D = \lceil \log_2 20 \rceil = 5$; or

   $\mu$ = 2, the first subcarrier spacing is 60 kHz, C1 = 0, the maximum duration of the COT is 40 slots, and $D = \lceil \log_2 40 \rceil = 6$.

5. The method according to claim 3 or 4, wherein the first subcarrier spacing is 15 kHz, 30 kHz, or 60 kHz.

6. The method according to any one of claims 1 to 5, wherein a quantity of slots needed by the first terminal device for data transmission is obtained by a physical layer of the first terminal device from a MAC layer of the first terminal device.

7. The method according to any one of claims 1 to 6, wherein the method further comprises:
   determining the first duration if the COT meets a first condition, wherein the first duration is the duration that is in the COT and that is allocable to the another terminal device.

8. The method according to claim 7, wherein the first condition comprises: the maximum duration of the COT is greater than or equal to second duration, and the second duration comprises a data processing delay of the another terminal device.

9. The method according to claim 8, wherein the data processing delay is preconfigured or predefined.

10. The method according to any one of claims 7 to 9, wherein the first duration is determined based on the maximum duration of the COT, data transmission duration of the first terminal device in the COT, and the data processing delay of the another terminal device.

11. The method according to any one of claims 1 to 10, wherein the COT meets one or more of the following:

the maximum duration of the COT is greater than the second duration, and the second duration is determined based on a period of time in which another terminal device receives the sharing information and the data processing delay of the another terminal device;
a difference obtained by subtracting the data transmission duration of the first terminal device in the COT from the maximum duration of the COT is greater than 0; or
the data transmission duration of the first terminal device in the COT is greater than or equal to a first threshold, and the first threshold is determined based on the data processing delay of the another terminal device.

12. The method according to any one of claims 1 to 11, wherein the method further comprises:
determining third duration, wherein the third duration is less than or equal to the maximum duration of the COT.

13. The method according to any one of claims 1 to 12, wherein the sharing information indicates a resource in the first duration, and the first duration is the duration that is in the COT and that is allocable to the another terminal device.

14. A communication apparatus, comprising a processor and a memory, wherein the memory is coupled to the processor, and the processor is configured to perform the method according to any one of claims 1 to 13.

15. A computer-readable storage medium, wherein the computer-readable storage medium is configured to store a computer program; and when the computer program is run on a computer, the computer is enabled to perform the method according to any one of claims 1 to 13.

16. A chip system, wherein the chip system comprises:
a processor and an interface, wherein the processor is configured to invoke instructions from the interface and run the instructions; and when the processor executes the instructions, the method according to any one of claims 1 to 13 is implemented.

17. A computer program product, wherein the computer program product comprises a computer program; and when the computer program is run on a computer, the computer is enabled to perform the method according to any one of claims 1 to 13.

Frequency
domain

Sensing window

Resource selection window

Resource
3

Resource
1

Resource
2

n    n+T1                                    n+T2    Time
                                                     domain

$T_{proc, 0}^{SL}$

$T_{proc, 1}^{SL}$

FIG. 1

Allocate a
resource in COT

UE 2

UE 1

Allocate a resource
in the COT

UE 3

FIG. 2

```
┌ ─ ─ ─ ─ ─ ─ ─ ─ ─ ─ ─ ─ ─ ─ ─ ─ ─ ─ ─ ─ ─ ─ ─ ─ ┐      S302
│              A first UE preempts COT              │
└ ─ ─ ─ ─ ─ ─ ─ ─ ─ ─ ─ ─ ─ ─ ─ ─ ─ ─ ─ ─ ─ ─ ─ ─ ┘
                           │
                           ▼
┌ ─ ─ ─ ─ ─ ─ ─ ─ ─ ─ ─ ─ ─ ─ ─ ─ ─ ─ ─ ─ ─ ─ ─ ─ ┐      S303
│  The first UE determines whether the COT meets a first condition  │
└ ─ ─ ─ ─ ─ ─ ─ ─ ─ ─ ─ ─ ─ ─ ─ ─ ─ ─ ─ ─ ─ ─ ─ ─ ┘
```

The first UE determines whether the COT meets a first condition — S303

The first UE determines first duration, where the first duration is duration that is in the COT and that is allocable to another UE — S301

The first UE determines a second UE and a resource needed by the second UE — S304

If all resources needed by the second UE are fewer than or equal to a remaining resource in the first duration, the first UE allocates the remaining resource in the first duration to all UEs included in the second UE; or if all resources needed by the second UE are more than a remaining resource in the first duration, the first UE allocates the remaining resource in the first duration to a part of UEs included in the second UE, or the first UE does not allocate a resource in the first duration to the second UE — S305

The first UE determines third duration, where the third duration includes duration occupied by the first UE and total duration allocated to the another UE that are in the COT — S306

FIG. 3

Sharable resources in COT

| Occupied by a first UE | UE 1 | UE 2 | UE 4 | UE 5 | UE 6 |
| | | UE 3 | | | A |

Not meet a resource requirement of a next UE

FIG. 4

MAC
layer

Notify data
transmission duration
of a first UE

Report the third duration
or the total duration of the
another UE in the COT

Physical
layer

Perform screening
on UEs, and allocate
a resource to a UE
obtained through
screening, to
determine total
duration occupied by
another UE in COT

Determine third
duration

FIG. 5

| First UE | | Second UE |

S601: Sharing information, indicating a resource that is in third duration and that is allocated to the second UE, where a quantity of bits of the sharing information is determined based on maximum duration of COT, or is determined based on the third duration

FIG. 6

| First UE | | Second UE | | Third UE |

S701: Sharing information, indicating a resource that is in COT and that is allocated to the second UE

S702: First data packet (a data priority corresponding to the COT is higher than a priority of a first transport block)

FIG. 7A

2: The UE 1 allocates a resource in COT to the UE 2

UE 1

1: Reservation message

3: Sharing information

5: Send the null packet on a resource indicated by the sharing information

UE 2

4: The UE 2 constructs a null packet if the UE 2 has no transport block that meets a data priority requirement

FIG. 7B

First UE

Second UE

S801: Reservation message, indicating at least one resource reserved by the second UE, and indicating information related to a priority of a transport block to be sent on the at least one resource

FIG. 8

Communication apparatus 900

901

Processor

CPU 0

CPU 1

905

Processor

CPU 0

CPU 1

903

Memory

Communication line 902

904

Communication interface

FIG. 9

Apparatus 1000

1001

Sending unit

1002

Processing unit

1003

Receiving unit

FIG. 10

## INTERNATIONAL SEARCH REPORT

| | |
|---|---|
| International application No. | |
| | **PCT/CN2023/143247** |

| A. | CLASSIFICATION OF SUBJECT MATTER |
|---|---|

H04W 72/02(2009.01)i

According to International Patent Classification (IPC) or to both national classification and IPC

| B. | FIELDS SEARCHED |
|---|---|

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT, WPABSC, ENTXTC, VEN, 3GPP: 侧行链路, 侧链路, 边链路, 副链路, 类型2, 共享, 分享, 信道占用时间, 信道占用时长, 第二, 另一, 优先级, 载波, 时隙, SL, SIDELINK, type2, share, sharing, COT, UE2, CAPC, carrier, slot

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 115443705 A (LENOVO (BEIJING) LTD.) 06 December 2022 (2022-12-06) description, paragraphs [0025]-[0093] and [0117]-[0123] | 1-17 |
| X | CN 112398613 A (HUAWEI TECHNOLOGIES CO., LTD.) 23 February 2021 (2021-02-23) description, paragraphs [0069]-[0103], and figure 8 | 1-17 |
| A | CN 111565475 A (SONY CORP.) 21 August 2020 (2020-08-21) entire document | 1-17 |
| A | WO 2021061880 A1 (QUALCOMM INC.) 01 April 2021 (2021-04-01) entire document | 1-17 |
| A | KYOCERA. "Resource Allocation Mode-2, R1-1907101" *3GPP TSG-RAN WG1#97*, 17 May 2019 (2019-05-17), entire document | 1-17 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 March 2024** | **21 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/143247**

| Patent document cited in search report | | | Publication date (day/month/year) | Patent family member(s) | | | Publication date (day/month/year) |
|---|---|---|---|---|---|---|---|
| CN | 115443705 | A | 06 December 2022 | WO | 2021212354 | A1 | 28 October 2021 |
| | | | | EP | 4140213 | A1 | 01 March 2023 |
| | | | | US | 2023132437 | A1 | 04 May 2023 |
| CN | 112398613 | A | 23 February 2021 | WO | 2021027940 | A1 | 18 February 2021 |
| | | | | EP | 3993302 | A1 | 04 May 2022 |
| | | | | US | 2022159724 | A1 | 19 May 2022 |
| CN | 111565475 | A | 21 August 2020 | WO | 2020164439 | A1 | 20 August 2020 |
| | | | | CN | 113396633 | A | 14 September 2021 |
| | | | | EP | 3927102 | A1 | 22 December 2021 |
| | | | | US | 2022078845 | A1 | 10 March 2022 |
| WO | 2021061880 | A1 | 01 April 2021 | EP | 4035468 | A1 | 03 August 2022 |
| | | | | US | 2021092783 | A1 | 25 March 2021 |
| | | | | CN | 114424640 | A | 29 April 2022 |
| | | | | IN | 202227009579 | A | 08 July 2022 |

Form PCT/ISA/210 (patent family annex) (July 2022)

**REFERENCES CITED IN THE DESCRIPTION**

**Patent documents cited in the description**

- CN 202310002205

- CN 202310128223